# EUROPÄISCHE PATENTSCHRIFT

(11) **EP 3 563 461 B1**
(45) Veröffentlichungstag und Bekanntmachung des Hinweises auf die Patenterteilung: **15.05.2024**
(21) Anmeldenummer: 17821937.4
(22) Anmeldetag: 27.12.2017
(51) Int. Cl.: H02J 3/14, H02J 3/38

(54) **VERFAHREN ZUM BETREIBEN EINES WINDPARKS**
METHOD FOR OPERATING A WIND FARM
PROCÉDÉ DE FONCTIONNEMENT D'UN PARC ÉOLIEN

(30) Priorität: 30.12.2016 DE 102016125953
(43) Veröffentlichungstag der Anmeldung: 06.11.2019
(73) Patentinhaber: Wobben Properties GmbH, 26607 Aurich (DE)
(72) Erfinder: BROMBACH, Johannes, 13437 Berlin (DE); SCHUBERT, Katharina, 40668 Meerbusch (DE); GIERTZ, Helge, 26789 Leer (DE); ROGGE, David, 21073 Hamburg (DE)
(74) Vertreter: Eisenführ Speiser
(86) Internationale Anmeldenummer: PCT/EP2017/084631
(87) Internationale Veröffentlichungsnummer: WO 2018/122253

(56) Entgegenhaltungen:
- WO-A1-2013/135504
- DE-A1-102011 088 313
- DE-A1-102013 208 474
- DE-A1-102013 222 452
- Steve Völler: "Optimierte Betriebsführung von Windenergieanlagen durch Energiespeicher (Dissertation)", , 1. Januar 2010 (2010-01-01), Seiten FP-XVI,1-147, XP002778949, Gefunden im Internet: URL:http://nbn-resolving.de/urn/resolver.p l?urn=urn%3Anbn%3Ade%3Ahbz%3A468-20100097 [gefunden am 2018-03-07]

## Beschreibung

Die vorliegende Erfindung betrifft ein Verfahren zum Betreiben eines mehrere Windenergieanlagen aufweisenden Windparks. Die vorliegende Erfindung betrifft auch einen entsprechenden Windpark.

Windparks sind bekannt. Sie weisen mehrere Windenergieanlagen auf und speisen mit diesen Windenergieanlagen über einen gemeinsamen Netzanschlusspunkt in ein elektrisches Versorgungsnetz ein. Zusätzlich zu dieser Hauptaufgabe des Energieeinspeisens können solche Windparks auch Aufgaben zum Stützen des elektrischen Versorgungsnetzes übernehmen oder zumindest einen Beitrag leisten.

Ein wichtiger, zumindest möglicher Beitrag zur Netzstützung besteht darin, bei Bedarf die eingespeiste Leistung zu reduzieren. Windenergieanlagen und damit Windparks verfügen dabei über die Eigenschaft, sehr schnell ihre eingespeiste Leistung reduzieren zu können. Sie können ihre eingespeiste Leistung beispielsweise innerhalb weniger Sekunden halbieren. Damit sind Windenergieanlagen bzw. Windparks im Grunde die Erzeuger in einem elektrischen Versorgungsnetz, die ohne Probleme am schnellsten ihre Leistung reduzieren können. Das bedeutet insbesondere auch, dass sie ihre Leistung praktisch ebenso schnell nach der Reduzierung wieder zur Verfügung stellen können. Besonders für Situationen, in denen kurzfristig zu viel Leistung in dem betreffenden elektrischen Versorgungsnetz vorhanden ist, kann somit durch Windenergieanlagen eine schnelle Stützung durch ebenso kurzfristige Reduzierung der Leistung erreicht werden.

Um ein durchgehend stabiles elektrisches Versorgungsnetz gewährleisten zu können, ist es für den Betreiber des elektrischen Versorgungsnetzes, der auch einfach als Netzbetreiber bezeichnet wird, wichtig, Informationen über die Leistung zu haben, um die reduziert werden kann. Windenergieanlagen bzw. Windparks können ihre eingespeiste Leistung im Grunde ohne Weiteres auch vollständig in kurzer Zeit reduzieren, was insoweit aber voraussetzt, dass auch Leistung eingespeist wird. Eingespeiste Leistung hängt bei einem Windpark besonders auch von der vorherrschenden Windgeschwindigkeit ab.

Um dem Netzbetreiber zu ermöglichen, beispielsweise einen Tag im Voraus zu planen, kann eine Windprognose bzw. Wetterprognose durchgeführt werden, um die für den prognostizierten Zeitraum einspeisbare und damit auch reduzierbare Leistung abzuschätzen.

Damit ist eine solche zu erwartende Leistung abschätzbar und der Netzbetreiber kann das in seine Planung einbeziehen, aber die Leistung ist nicht so sicher bekannt, dass der Netzbetreiber damit fest rechnen könnte. Aus diesem Grunde wird häufig eine Art Risikoabschätzung gemacht, die davon ausgeht, dass von einer prognostizierten Leistung tatsächlich nur wenige Prozent, beispielsweise 3% als gesichert angenommen werden können. Wird also eine Leistung von 1 MW prognostiziert, führt eine Sicherheitsüberlegung, die 3% ansetzt, zu einem gesicherten Stützwert von 30 kW. Entsprechend wird auch bei einer Vergütung dieser Systemdienstleistung nur dieser Sicherheitswert zugrunde gelegt. Mit anderen Worten könnte in dem genannten beispielhaften Fall eine negative Minutenregelleistung von 1 MW zur Verfügung gestellt werden, wohingegen aber nur 30 kW vermarktet werden können.

Der vorliegenden Erfindung liegt somit die Aufgabe zugrunde, zumindest eines der oben genannten Probleme zu adressieren. Insbesondere soll eine Lösung vorgeschlagen werden, die es ermöglicht, dass ein Windpark eine möglichst hohe negative Regelleistung, insbesondere Minutenregelleistung bereitstellen kann, nämlich auch für einen vorausgeplanten Zeitraum sicher zur Verfügung stellen kann, so dass der Netzbetreiber damit fest rechnen kann, bzw. der Parkbetreiber diese an den Netzbetreiber vermarkten kann. Zumindest soll zu bisher bekannten Lösungen eine alternative Lösung vorgeschlagen werden.

Das Deutsche Patent- und Markenamt hat in der Prioritätsanmeldung zu vorliegender PCT-Anmeldung folgenden Stand der Technik recherchiert: DE 10 2012 215 565 A1 und US 2016/0226258 A1.

Im Verfahren vor dem Europäischen Patentamt wurden folgende Dokumente ermittelt: "Optimierte Betriebsführung von Windenergieanlagen", Dissertation von Steve Völler, DE 10 2013 208 474 sowie DE 10 2013 222 452.

Erfindungsgemäß wird ein Verfahren gemäß Anspruch 1 vorgeschlagen. Das Verfahren geht von einem Windpark aus, der mehrere Windenergieanlagen aufweist. Mit diesen Windenergieanlagen wird elektrische Leistung aus Wind erzeugt und diese elektrische Leistung wird von diesem Windpark in ein elektrisches Versorgungsnetz eingespeist, nämlich üblicherweise über einen Netzanschlusspunkt. Demnach wird also elektrische Leistung in das elektrische Versorgungsnetz eingespeist.

Grundsätzlich kann statt eines Windparks auch nur eine Windenergieanlage verwendet werden. Die Windenergieanlage kann dabei grundsätzlich wie ein Windpark arbeiten, liefert aber meist weniger Leistung als ein Windpark und ist daher oftmals für eine Netzstützung nicht so relevant, kommt aber in Betracht. Alle nachfolgenden Beschreibungen zu einem Windpark gelten sinngemäß auch für eine Windenergieanlage, solange es nicht Besonderheiten des Windparks betrifft, die nicht auf eine Windenergieanlage übertragbar sind, wie beispielsweise Merkmale, die die Koordination mehrerer Windenergieanlagen in einem Windpark betreffen.

Außerdem wird eine Prognoseleistung ermittelt. Die Prognoseleistung ist eine Leistung, die in einem vorbestimmten zukünftigen Prognosezeitraum durch den Windpark eingespeist werden kann. Besonders wird hier eine Wind- bzw. Wetterprognose vorgenommen, aus der dann abgeleitet werden kann, wie viel Leistung der Windpark beispielsweise in den kommenden 24 Stunden einspeisen kann. Dabei wird vorzugsweise auch mit berücksichtigt, ob alle Windenergieanlagen betriebsbereit sind, oder beispielsweise sich einer Wartung unterziehen müssen, um nur ein Beispiel einer Randbedingung zu nennen. Die Wetterprognose kann auch beispielsweise berücksichtigen, ob mit einer Eissituation zu rechnen ist und entsprechend einige Windenergieanlagen nicht und/oder nur bei gleichzeitiger Beheizung der Blätter betrieben werden können, um ein weiteres Beispiel einer Berücksichtigung zu nennen.

Weiterhin wird für den Prognosezeitraum eine Reduktionsprognoseleistung bestimmt. Diese Reduktionsprognoseleistung ist die Leistung, um die die im Prognosezeitraum eingespeiste Leistung reduziert werden kann.

Dann wird die Reduktionsprognoseleistung als negative Regelleistung angeboten, insbesondere als vermarktbare negative Regelleistung. Der Windpark überträgt dafür beispielsweise Signale an einen Netzbetreiber, die die Information enthalten, zu welcher Zeit bzw. in welchem Zeitraum der Windpark um wie viel Leistung seine eingespeiste Leistung reduzieren kann.

Es wird nun vorgeschlagen, dass die Reduktionsprognoseleistung in Abhängigkeit der Prognoseleistung und in Abhängigkeit einer steuerbaren Verbrauchsleistung bestimmt wird. Die Bestimmung der Prognoseleistung wurde bereits erläutert und die steuerbare Verbrauchsleistung ist eine Leistung, die in dem Prognosezeitraum durch in dem Windpark vorhandene, steuerbare Verbraucher auf Anforderung verbraucht werden kann. Solche steuerbaren Verbraucher können beispielsweise eine Blattheizung sein, oder ein Lüfter, um nur zwei Beispiele zu nennen. Es kommen aber auch Verbraucher in Betracht, die nicht unmittelbar Teil einer Windenergieanlage sind, aber Teil des Windparks. Es können auch elektrische Leitungen im Windpark als elektrische Verbraucher verwendet werden. Zumindest werden hier Verbraucher betrachtet, die auf Anforderung ansteuerbar sind. Es geht also um Verbraucher, die gezielt auf eine Anforderung hin, insbesondere auf eine Anforderung, die eine zentrale Steuereinheit erzeugt, zum Verbrauch von Leistung angesteuert werden können. Es geht besonders darum, dass solche Verbraucher zusätzlich zu und/oder unabhängig von ihrem üblichen Verwendungszweck angesteuert werden. Der übliche Verwendungszweck einer Blattheizung, um bei diesem Beispiel zu bleiben, ist das betreffende Rotorblatt zum Enteisen oder zum Schutz vor Vereisung zu beheizen. Eine solche Blattheizung kann aber auch betrieben werden, wenn keine Vereisung vorliegt oder zu verhindern ist. Sofern diese beispielhaft genannte Blattheizung auch unabhängig von ihrem originären Verwendungszweck, nämlich der Enteisung oder Vereisungsverhinderung, angesteuert werden kann, insbesondere durch eine zentrale Parksteuereinheit, ist sie ein auf Anforderung steuerbarer Verbraucher im erfindungsgemäßen Sinne und kann eine steuerbare Verbrauchsleistung bereitstellen.

Um ein weiteres bereits genanntes Beispiel aufzugreifen, nämlich Übertragungsleitungen im Windpark, so ist deren originärer Zweck, Leistung zu übertragen, nämlich insbesondere von jeweils einer Windenergieanlage zu einem Netzanschlusspunkt. Wird hier nun zusätzlich von einer Windenergieanlage Blindleistung übertragen, die von einer anderen Windenergieanlage aufgenommen wird bzw. zu der von einer anderen Windenergieanlage entsprechend kompensierende Blindleistung eingespeist wird, so wird diese Leitung dann als steuerbarer Verbraucher betrieben und ist ein steuerbarer Verbraucher im Sinne der Erfindung, wenn eine solche Verbrauchsleistung auf Anforderung, besonders auf Anforderung durch die zentrale Parksteuereinheit, gesteuert werden kann. Besonders kann wenigstens eine Windenergieanlage einen solchen Blindstrom erzeugen, dass dadurch Blindstrom aus dem elektrischen Versorgungsnetz aufgenommen wird und zu einem Leistungsverbrauch in der elektrischen Leitung führt.

Es wird nun vorgeschlagen, für den gesamten Windpark zu berücksichtigen, wie viel solcher oder anderer steuerbarer Verbrauchsleistung vorhanden ist bzw. aktivierbar ist. Diese insgesamt vorhandene bzw. aktivierbare steuerbare Verbrauchsleistung und die bereits erläuterte Prognoseleistung werden nun zugrunde gelegt, um abhängig davon die Reduktionsprognoseleistung zu bestimmen.

Besonders wurde hier erkannt, dass nun die Reduktionsprognoseleistung durch diese steuerbare Verbrauchsleistung in ihrem Betrag erhöht werden kann. Die Prognoseleistung ist möglicherweise nicht exakt oder nicht ausreichend sicher bekannt und kann somit möglicherweise nur zu einem Teil für die Bestimmung der Reduktionsprognoseleistung berücksichtigt werden, aber immerhin kann sie auch berücksichtigt werden. Vorzugsweise wird von der Prognoseleistung für einen Zeitabschnitt innerhalb des Prognosezeitraumes ein Minimalwert verwendet, so dass die Reduktionsprognoseleistung für den betreffenden Prognosezeitraum in Abhängigkeit dieses Minimalwertes berechnet wird.

Zusätzlich kommt zur Bestimmung der Reduktionsprognoseleistung die steuerbare Verbrauchsleistung hinzu, die regelmäßig auch den Vorteil hat, dass sie zumindest bis zu einem gewissen Grade als gesichert angesehen werden kann. Um bei dem genannten Beispiel der Blattheizung zu bleiben, ist die Leistungsaufnahme dieser Blattheizung bekannt und es ist auch gut bekannt, ob diese Blattheizung überhaupt in dem Prognosezeitraum anderweitig benötigt wird oder als steuerbare Verbrauchsleistung zur Verfügung steht. Ist es also beispielsweise warm genug, so ist nicht damit zu rechnen, dass diese Blattheizung benötigt wird. Dann wird vorzugsweise noch berücksichtigt, ob in Abhängigkeit der Außentemperatur möglicherweise nur eine teilweise Beheizung in Betracht kommt, um ein Überhitzen zu vermeiden. Regelmäßig kann aber die Situation vorliegen, dass die Blattheizung bis zu ihrem Nennwert auch dauerhaft betrieben werden kann. Dieser Nennwert steht dann als steuerbare Verbrauchsleistung zur Verfügung und kann für die Bestimmung der Reduktionsprognoseleistung verwendet werden.

Die Reduktionsprognoseleistung kann sich also aus einem Teil der Prognoseleistung und der steuerbaren Verbrauchsleistung zusammensetzen. Diese Werte können nämlich dem Betrage nach aufaddiert werden, also der Betrag des berücksichtigbaren Teils der Prognoseleistung und der Betrag der steuerbaren Verbrauchsleistung.

Vorzugsweise wird vorgeschlagen, dass die eingespeiste Leistung auf eine Anforderung zur Netzstützung in dem Prognosezeitraum um einen Wert bis zur Höhe der Reduktionsprognoseleistung reduziert wird. Es wird also davon ausgegangen, dass eine Reduktionsprognoseleistung bestimmt und beispielsweise an den Netzbetreiber bzw. seine Netzleitstelle als Angebot übertragen wurde. Tritt nun ein solcher Stützfall ein, bei dem der Netzbetreiber auf diese prognostizierte und angebotene Reduktionsprognoseleistung zurückgreift, reduziert der Windpark seine eingespeiste Leistung entsprechend. Der Netzbetreiber kann dann nämlich einen Teil der angebotenen Reduktionsprognoseleistung in Anspruch nehmen oder er kann diese angebotene Reduktionsprognoseleistung vollständig in Anspruch nehmen. Der Windpark reduziert dann also seine eingespeiste Leistung um den Wert, den der Netzbetreiber in Anspruch nimmt.

Dabei braucht der Windpark aber nicht unbedingt die steuerbaren Verbraucher anzusteuern, sondern kann zunächst die eingespeiste Leistung reduzieren. Die eingespeiste Leistung entspricht im Idealfall der zuvor prognostizierten Leistung, also der Prognoseleistung des Prognosezeitraumes, in dem sich der Windpark dann befindet. Diese Prognoseleistung ist bei dem Bestimmen der Reduktionsprognoseleistung, die dem Netzbetreiber angeboten wurde, berücksichtigt worden, aber nicht ausschließlich. Besonders ist anzunehmen, dass nur ein Teil der Prognoseleistung bei der Bestimmung der Reduktionsprognoseleistung berücksichtigt wurde. Es ist nun also sehr wahrscheinlich, dass mehr Leistung eingespeist wird, als bei der Bestimmung der Reduktionsprognoseleistung als gesichert eingespeiste Leistung angenommen wurde. Entsprechend kann auch die aktuell eingespeiste Leistung um entsprechend mehr reduziert werden.

Um ein einfaches Beispiel zu nennen, könnte eine Prognoseleistung von 1 MW prognostiziert worden sein. Davon wurden dann 3% als gesicherter Wert für die Bestimmung der Reduktionsprognoseleistung berücksichtigt, also 30 kW, um bei dem oben bereits genannten Beispiel zu bleiben. Zusätzlich wird angenommen, dass eine steuerbare Verbrauchsleistung von 300 kW vorliegt. Die Reduktionsprognoseleistung beträgt dann also für dieses Beispiel 330 kW. Wenn sich nun aber die prognostizierte Leistung, also die Prognoseleistung tatsächlich einstellt, nämlich in der Höhe von 1 MW und der Netzbetreiber auf die vollständige Reduktionsprognoseleistung zurückgreifen möchte, bedeutet das, dass eine Reduktion der eingespeisten Leistung um 330 kW angefordert wird. Die eingespeiste Leistung kann dann also auf 670 kW reduziert werden, ohne dass auch nur einer der steuerbaren Verbraucher auf Anforderung angesteuert wurde, um die steuerbare Verbrauchsleistung oder einen Teil davon abzunehmen.

Entscheidend war, dass diese beispielhaften 330 kW nicht nur angeboten, sondern auch gesichert angeboten werden konnten. Dazu wurde die steuerbare Verbrauchsleistung mit benötigt, so dass sich der Netzbetreiber auf diese 330 kW verlassen konnte. Wenn dann der tatsächliche Stützfall eintritt, kann dennoch eine Reduzierung nur der tatsächlich eingespeisten Leistung in Betracht kommen. Natürlich kann aber auch die gesamte oder ein Teil der dann angeforderten Reduktionsleistung auch tatsächlich durch die steuerbaren Verbraucher erfüllt werden. Ob es zweckmäßig ist, die erzeugte Leistung zu reduzieren oder einen Teil der erzeugten Leistung durch die steuerbaren Verbraucher abzunehmen, kann individuell entschieden werden und beispielsweise auch von der Art des Verbrauchers abhängen.

Es kommt aber auch der Fall in Betracht, dass tatsächlich deutlich weniger Leistung erzeugt und eingespeist wird, als ursprünglich als Prognoseleistung prognostiziert wurde. Wird also beispielsweise weniger Leistung als prognostiziert erzeugt und eingespeist und dann eine hohe Reduktionsleistung angefordert, kommt auch in Betracht, dass dazu Leistung aus dem Netz von dem Windpark bezogen wird. Es wird dann also negative Leistung eingespeist.

Wird also beispielsweise, um bei dem obigen Beispiel zu bleiben, nur eine Leistung von 200 kW eingespeist und fordert der Netzbetreiber die vollständig angebotene Reduktionsprognoseleistung als Reduktionsleistung an, fordert er also 330 kW Reduktionsleistung an, so kann die Leistungserzeugung durch den Windpark auf Null reduziert werden, wodurch die eingespeiste Leistung um 200 kW reduziert wird. Zusätzlich können 130 kW aus dem Netz bezogen und von den steuerbaren Verbrauchern verbraucht werden. Der Windpark hat dann seine eingespeiste Leistung um insgesamt 330 kW, also wie angeboten und wie nun auch vom Netzbetreiber angefordert, reduziert, nämlich von 200 kW auf - 130 kW. Auch das ist nur ein Beispiel, das selbst mit einer einzelnen Windenergieanlage realisiert werden könnte. Tatsächlich kann das erfindungsgemäße Verfahren auch mit einer einzelnen Windenergieanlage durchgeführt werden. Häufig werden aber größere Leistungen als Stützleistungen vom Netzbetreiber gewünscht, so dass dann die Verwendung eines Windparks mit mehreren Windenergieanlagen vorteilhaft ist.

Vorzugsweise wird somit vorgeschlagen, dass einer oder mehrere der steuerbaren Verbraucher eingeschaltet werden und/oder in ihrer Leistungsabnahme gesteuert werden, so dass dadurch die eingespeiste Leistung reduziert wird, wobei zusätzlich Leistung aus dem elektrischen Versorgungsnetz entnommen und verbraucht wird, wenn die eingespeiste, noch nicht reduzierte Leistung geringer als die Reduktionsprognoseleistung ist und auch geringer als eine angeforderte Reduktionsleistung ist. Wenn die eingespeiste, noch nicht reduzierte Leistung also geringer ist als die angeforderte Reduktionsleistung, wird die angeforderte Reduktionsleistung zumindest teilweise durch die steuerbaren Verbraucher realisiert. Dabei wird davon ausgegangen, dass die Reduktionsleistung auch maximal nur bis zur Reduktionsprognoseleistung angefordert wird. Natürlich soll nicht ausgeschlossen werden, auch mehr Reduktionsleistung als die Reduktionsprognoseleistung bereitzustellen bzw. abzunehmen. Das Bestimmen und Anbieten der Reduktionsprognoseleistung geht von diesem Sonderfall allerdings zunächst nicht aus.

Vorzugsweise wird die Reduktionsprognoseleistung so bestimmt, dass sie sich wenigstens aus der Produktionsleistung oder einem Wert davon, multipliziert mit einem vorgebbaren Gütewert, und der steuerbaren Verbrauchsleistung zusammensetzt. Die Prognoseleistung ist somit eine Leistung, die in dem Prognosezeitraum erwartet wird und besonders, aber nicht unbedingt ausschließlich, von einer Wind- und/oder Wetterprognose abhängt. Um aus dieser Prognoseleistung eine sicher zu erwartende Leistung abzuleiten, wird diese Prognoseleistung mit einem vorgebbaren Gütewert multipliziert, der somit <1 aber >0 sein muss. Er kann beispielsweise 3% betragen. Die Berechnung kann auch für einen Zeitabschnitt erfolgen. Schwankt die Prognoseleistung über diesen Zeitabschnitt, kann ein Minimalwert der Prognoseleistung verwendet werden.

Da hinzu kommt dann die steuerbare Verbrauchsleistung. Diese mit dem vorgebbaren Gütewert multiplizierte Prognoseleistung oder der damit multiplizierte Prognoseleistungswert und die steuerbare Verbrauchsleistung werden zu der Reduktionsprognoseleistung addiert. Ein entsprechendes Beispiel wurde oben bereits angegeben und erläutert.

Erfindungsgemäß wird zur Bestimmung der steuerbaren Verbrauchsleistung auch noch jeweils die prognostizierte Verfügbarkeit jedes steuerbaren Verbrauchers berücksichtigt. Auch dazu wurde oben schon eine Erläuterung für das Beispiel einer Blattheizung als steuerbarer Verbraucher gegeben, demnach die Betreibbarkeit der Blattheizung zum einen davon abhängt, ob sie überhaupt als Beitrag für die Reduktionsprognoseleistung in Betracht kommt oder aufgrund der Witterung möglicherweise bereits gemäß ihrem eigentlichen Zweck, nämlich der Blattenteisung oder Vereisungsverhinderung benutzt wird. Wird sie nämlich zur Enteisung oder als Eisbildungsschutz verwendet, kann ihre verbrauchbare Leistung nicht Teil der Reduktionsprognoseleistung sein, denn sie kann im Fall der Fälle, wenn eingespeiste Leistung reduziert werden muss, keine zusätzliche Leistung aufnehmen. In diesem Fall wäre die prognostizierte Verfügbarkeit null.

Als weiteres Beispiel wurde genannt, dass die Blattheizung aufgrund sehr hoher Temperaturen in der Umgebung nicht maximal betrieben werden kann, weil dies zu hohen Temperaturwerten führen könnte. Wenn also beispielsweise abhängig der Wetterprognose, insbesondere der insoweit ungünstigsten Wetterprognose, die Blattheizung nur mit 50% ihrer Nennleistung betrieben werden könnte, würde hier als prognostizierte Verfügbarkeit der Wert 0,5 bzw. 50% berücksichtigt.

Gemäß einer Ausgestaltungsform wird vorgeschlagen, dass sich die steuerbare Verbrauchsleistung aus mehreren Teilleistungen zusammensetzt. Jede Teilleistung ist einem steuerbaren Verbraucher zugeordnet und beschreibt somit die zu berücksichtigende Leistung dieses ihres steuerbaren Verbrauchers. Wenigstens eine dieser Teilleistungen berechnet sich dabei aus einer maximalen Leistung ihres steuerbaren Verbrauchers multipliziert mit einer prognostizierten Verfügbarkeit ihres steuerbaren Verbrauchers. Vorzugsweise berechnen sich mehrere Teilleistungen auf diese Art und Weise, jeweils bezogen auf ihren steuerbaren Verbraucher und auch jeweils bezogen auf eine prognostizierte Verfügbarkeit ihres steuerbaren Verbrauchers. Vorzugsweise berechnen sich alle Teilleistungen auf diese Art und Weise.

So kann beispielsweise die steuerbare Leistung die Summe zweier Teilleistungen sein. Hierbei könnte die erste Teilleistung beispielsweise der bereits oben genannten Blattheizung zugeordnet werden. Die maximale Leistung dieses Verbrauchers, also dieser Blattheizung, kann die Nennleistung des Verbrauchers sein. Beispielsweise könnte die Blattheizung eine Nennleistung von 200 kW aufweisen. Hat die Wetterprognose, wie oben schon gemäß einem Beispiel ausgeführt, ergeben, dass nur 50% der Leistung der Blattheizung zur Reduktionsprognoseleistung verwendet werden können, ergäbe sich hier die erste Teilleistung als das Produkt von 200 kW als der maximalen Leistung des Verbrauchers, multipliziert mit 50%, also 0,5 als prognostizierte Verfügbarkeit. Die erste Teilleistung wäre in diesem Beispiel 100 kW.

Die zweite Teilleistung könnte einer Übertragungsleitung im Park zugeordnet werden, einschließlich damit verbundenem Wechselrichter, der darüber eine Blindleistung bzw. einen Blindstrom überträgt bzw. aufnimmt. Hierdurch könnte maximal 100 kW Leistung verbraucht werden und es könnte umso weniger Leistung verbraucht werden, je mehr diese Leistung bzw. der wenigstens eine zugehörige Wechselrichter zum Erzeugen bzw. Übertragen einzuspeisender Leistung benötigt wird. Ist also die Prognose so, dass viel Wind erwartet wird und viel Leistung eingespeist werden kann, kann die Leitung beispielsweise nur zu 30% noch zum Verbrauchen von Leistung verwendet werden. Es ergäbe sich für die zweite Teilleistung dann ein Wert von 100 kW multipliziert mit 30%, so dass sich 30 kW ergeben.

In diesem letzten anschaulichen Beispiel für die zweite Teilleistung kann aber dennoch statt der prognostizierten Verfügbarkeit von 30% der Wert 1, also 100%, angesetzt werden, denn die prognostizierte Verfügbarkeit von 30% ergibt sich nur dann, wenn viel Leistung eingespeist wird. Dann wiederum kann aber auch sehr viel Leistung als Reduktionsleistung im Fall der Fälle bereitgestellt werden, wenn eine Leistungsreduktion durchgeführt werden muss. Die Leitung als zusätzlicher Verbraucher würde nur dann benötigt, wenn entgegen der Windprognose nur sehr wenig Leistung eingespeist werden würde, oder sogar gar keine Leistung. In dem Fall könnte aber auch die Übertragungsleitung vollständig als steuerbarer Verbraucher eingesetzt werden.

Im vorliegenden Beispiel ergäbe sich dann also die steuerbare Verbrauchsleistung zu 200 kW, nämlich aus der ersten Teilleistung zu 100 kW und der zweiten Teilleistung ebenfalls zu 100 kW.

Vorzugsweise wird vorgeschlagen, dass die steuerbaren Verbraucher durch eine zentrale Parksteuereinheit des Windparks angesteuert werden. Über diese zentrale Parksteuereinheit des Windparks, die auch vereinfacht als Windparkregler bezeichnet werden kann, können diese steuerbaren Verbraucher des Windparks somit gesteuert und damit kontrolliert werden. Außerdem können sie dadurch auch insgesamt für den Park berücksichtigt werden und vorzugsweise führt die zentrale Parksteuereinheit die Berechnung bzw. Bestimmung der steuerbaren Verbrauchsleistung der Höhe nach durch. Insbesondere führt sie auch die Bestimmung der Reduktionsprognoseleistung durch. Dadurch kann der Windpark als eine Einheit für eine solche Netzstützung durch Anbieten negativer Regelleistung, nämlich durch Anbieten der Reduktionsprognoseleistung, im bzw. am Netz agieren.

Außerdem oder alternativ wird vorgeschlagen, dass die zentrale Parksteuereinheit von einer Netzleitstelle, die zur Steuerung des elektrischen Versorgungsnetzes vorgesehen ist, ein Anforderungssignal erhält. Dieses Anforderungssignal kann dann die Anforderung zur Netzstützung bilden. Weiterhin arbeitet diese zentrale Parksteuereinheit vorzugsweise so, dass sie in Abhängigkeit dieser Anforderung die eingespeiste Leistung reduziert und ggf. die steuerbaren Verbraucher entsprechend ansteuert. Dadurch kann die Netzleitstelle und damit insbesondere auch der Netzbetreiber, der das elektrische Versorgungsnetz betreibt, einen Windpark in vorteilhafter Weise zur Netzstützung verwenden. Besonders kann durch die Netzleitstelle eine hohe negative Regelleistung in sehr kurzer Zeit aktiviert werden. Wenigstens ein Teil dieser negativen Regelleistung kann durch das Ansteuern von Verbrauchern, die insoweit auch als Lasten bezeichnet werden können, realisiert werden. Dabei kommt sowohl in Betracht, Verbraucher zu- oder abzuschalten, oder Verbraucher jeweils in der Höhe ihres Verbrauchs zu steuern. Auch die abgegebene Leistung jeder Windenergieanlage ist in ihrer Höhe steuerbar. Besonders durch eine Kombination der Steuerung der Verbraucher und der Steuerung der Abgabeleistung der Windenergieanlagen kann, innerhalb technischer Grenzen, im Grund jeder Arbeitspunkt angefahren werden, der Windpark in seiner Leistungsabgabe also können stufenlos eingestellt werden.

Gemäß einer weiteren Ausführungsform wird vorgeschlagen, dass wenigstens ein Energiespeicher im Windpark vorhanden ist, um zumindest kurzfristig zusätzliche Leistung zur Windleistung, die durch die Windenergieanlage eines Windparks erzeugt wird, zum Einspeisen in das elektrische Versorgungsnetz bereitzustellen. Ein solcher Energiespeicher, der beispielsweise ein Batteriespeicher sein kann, kann somit zusätzliche Leistung in das elektrische Versorgungsnetz einspeisen, zumindest kann er dafür Leistung bereitstellen.

Dazu wird nun gemäß der genannten Ausführungsform vorgeschlagen, dass die Reduktionsprognoseleistung zusätzlich in Abhängigkeit verfügbarer Leistung des wenigstens einen Energiespeichers bestimmt wird. Die Reduktionsprognoseleistung kann hier also auch Leistung berücksichtigen, die dieser Energiespeicher in das elektrische Versorgungsnetz einspeist und um die die in das elektrische Versorgungsetz eingespeiste Leistung somit auch reduziert werden kann. Die Berücksichtigung einer solchen Leistung des wenigstens einen Energiespeichers hat besonders den Vorteil, dass sie auch sicher prognostiziert werden kann, denn der Speicherinhalt dieses Energiespeichers dürfte bekannt sein und auch seine Kapazität, Leistung in das elektrische Versorgungsnetz einzuspeisen, also welche maximalen Entladeströme zulässig sind.

Außerdem oder alternativ kann hier auch mit in die Bestimmung der Reduktionsprognoseleistung solche Leistung einfließen, die der Energiespeicher aus dem elektrischen Versorgungsnetz aufnehmen kann. Auch diese Leistung ist für den Energiespeicher sehr gut vorhersehbar und dadurch kann die angebotene Reduktionsprognoseleistung um einen entsprechend sicheren Wert erhöht werden.

Vorzugsweise wird die Reduktionsprognoseleistung als negative Minutenregelleistung verwendet. Der Netzbetreiber kann also von dem betreffenden Windpark anfordern, dass dieser seine eingespeiste Leistung bis zur Höhe der Reduktionsprognoseleistung kurzfristig reduziert. Diese Reduktion kann innerhalb weniger Sekunden angefordert und durchgeführt werden. Besonders wird vorgeschlagen, dass sie innerhalb weniger Sekunden, besonders innerhalb von 30 s, vorzugsweise innerhalb von 20 s und insbesondere innerhalb von 10 s realisiert wird. Vorzugsweise wird sie dabei auch nur für eine oder wenige Minuten, insbesondere weniger als 10 min, realisiert. Die Leistungseinspeisung des Windparks wird also in einer Zeit <1 min reduziert und die Reduktion hält vorzugsweise nur wenige Minuten an. Eine solche Netzstützung kann regelmäßig für kurzfristig im elektrischen Versorgungsnetz auftretende transiente Vorgänge zur Stützung ausreichen. Wichtig ist, dass sich der Netzbetreiber darauf verlassen kann, dass eine solche Reduktion bis zur Höhe der angebotenen Reduktionsprognoseleistung auch angefordert werden kann.

Gemäß einer Ausführungsform wird vorgeschlagen, dass zum Ansteuern oder Koordinieren des Ansteuerns eines, mehrerer oder aller der steuerbaren Verbraucher eine zentrale Verbrauchssteuereinheit vorgesehen ist. Diese zentrale Verbrauchssteuereinheit ist vorzugsweise mit der zentralen Parksteuereinheit gekoppelt und erhält einen gesamten Verbrauchssollwert von der zentralen Parksteuereinheit. Dieser gesamte Verbrauchssollwert gibt an, um welchen Wert der Verbrauch der steuerbaren Verbraucher insgesamt reduziert werden soll. Die zentrale Parksteuereinheit kann somit einen solchen gesamten Verbrauchssollwert vorgeben und die konkrete Umsetzung oder Koordination erfolgt durch die Verbrauchssteuereinheit. Dadurch kann besonders eine Struktur vereinfacht werden und die zentrale Parksteuereinheit braucht nur im Hinblick auf die eingespeiste Leistung und die angeforderte Reduktionsleistung, die nämlich der Netzbetreiber anfordert, eine Reduzierung der erzeugten Leistung zu koordinieren. Sie kann die eingespeiste Leistung reduzieren und kann dann, wenn ein Bedarf an weiterer Leistungsreduzierung besteht, diesen Bedarf als gesamten Verbrauchssollwert an die Verbrauchssteuereinheit übertragen, die sich um die Koordination kümmert. Vorzugsweise wird die Verbrauchssteuereinheit auch dazu verwendet, die insgesamt steuerbare Verbrauchsleistung zu berechnen. Dieser Wert kann an ein Prognosebestimmungsmittel, das Teil der zentralen Parksteuereinheit sein kann, gegeben werden, damit dieses Prognosebestimmungsmittel bzw. die zentrale Parksteuereinheit unter Berücksichtigung dieser steuerbaren Verbrauchsleistung die Reduktionsprognoseleistung bestimmen und anbieten kann.

Vorzugsweise wird die Prognoseleistung und außerdem oder alternativ die Reduktionsprognoseleistung als zeitlicher Verlauf über den Prognosezeitraum angegeben. Damit können zeitliche Verläufe berücksichtigt und hinterlegt werden. Besonders können darin auch entsprechende Wind- und/oder Wetterprognosen berücksichtigt werden, die regelmäßig auch über die Zeit schwanken.

Vorzugsweise beträgt der Prognosezeitraum etwa 24 Stunden. Dieser Prognosezeitraum kann auch kleiner oder größer angesetzt werden. Vorzugsweise liegt er im Bereich von 12 bis 48 Stunden, weiter vorzugsweise in einem Bereich von 18 bis 36 Stunden. Insbesondere beträgt er etwa einen Tag. Dadurch wird für den Netzbetreiber eine Planbarkeit von etwa 1 Tag erreicht. Gleichzeitig ist dieser Prognosezeitraum von etwa 1 Tag ein Zeitraum, für den mit recht guter Genauigkeit und Zuverlässigkeit eine Wind- und/oder Wetterprognose bzw. Wettervorhersage gemacht werden kann.

Bevorzugt wird der Prognosezeitraum in 4-Stunden-Zeitabschnitte unterteilt und für jeden dieser Zeitabschnitte wird eine Reduktionsprognoseleistung bestimmt. Damit kann für jeden dieser Zeitabschnitte eine Reduktionsprognoseleistung angeboten und insbesondere vermarktet werden. Ein Netzbetreiber kann dadurch für 4-Stunden-Zeitabschnitte solche Reduktionsprognoseleistungen buchen, um dadurch in den so gebuchten Zeitabschnitten die Möglichkeit zu haben, bei Bedarf eine negative Regelleistung anzufordern.

Vorzugsweise wird dieser Prognosezeitraum in Intervalle unterteilt, insbesondere in Intervalle von etwa 15 min, also etwa vier Intervalle pro Stunde. Eine solche zeitliche Unterteilung in Intervalle schafft die Möglichkeit, eine zeitliche Veränderung der Bedingungen über den Prognosezeitraum gut abzubilden, wobei gleichzeitig aber in den Intervallen jeweils stabile Werte zur Verfügung gestellt werden können. Damit kann auch erreicht werden, dass keine große Datenmenge zwischen Windpark und Netzbetreiber bzw. zwischen Windpark und Netzleitstelle übertragen werden muss.

Erfindungsgemäß wird zudem ein Windpark vorgeschlagen. Dieser Windpark umfasst eine Einspeisevorrichtung zum Einspeisen elektrischer Leistung in das elektrische Versorgungsnetz. Eine solche Einspeisevorrichtung kann besonders als Wechselrichter an jeder der Windenergieanlagen vorgesehen sein. Außerdem kann ein Transformator am Netzanschlusspunkt, an dem bzw. über den in das elektrische Versorgungsnetz eingespeist wird, vorgesehen sein.

Außerdem umfasst dieser Windpark eine Ermittlungsvorrichtung zum Ermitteln einer Prognoseleistung, die eine in einem vorbestimmten, zukünftigen Prognosezeitraum durch den Windpark einspeisbare Leistung beschreibt. Die Ermittlungsvorrichtung kann besonders einen Prozessrechner beinhalten, der mit entsprechenden Informationen versorgt wird, die zum Ermitteln der Prognoseleistung benötigt werden.

Außerdem wird ein Prognosebestimmungsmittel vorgeschlagen, das zum Bestimmen einer Reduktionsprognoseleistung vorbereitet ist, die für den Prognosezeitraum eine Leistung bezeichnet, um welche die im Prognosezeitraum eingespeiste Leistung reduziert werden kann. Auch ein solches Prognosebestimmungsmittel kann als Prozessrechner ausgebildet sein oder einen solchen umfassen. Das Prognosebestimmungsmittel kann auch Teil der Ermittlungsvorrichtung sein, oder umgekehrt. Die Ermittlungsvorrichtung und/oder das Prognosebestimmungsmittel können Teil einer zentralen Parksteuereinheit sein.

Außerdem wird ein Anbietmittel vorgeschlagen zum Anbieten der Reduktionsprognoseleistung als negative Regelleistung. Das Anbietmittel kann ebenfalls einen Prozessrechner beinhalten und eine Kommunikationsschnittstelle zum Kommunizieren mit einer Netzleitstelle. Hierüber können Daten zwischen der Netzleitstelle und dem Anbietmittel ausgetauscht werden. Besonders kann hierüber das Anbietmittel Werte an die Netzleitstelle übertragen, die die Reduktionsprognoseleistung der Höhe nach angeben. Vorzugsweise ist die Kommunikation so ausgestaltet, dass solche Werte in vorbestimmten Abständen wie beispielsweise alle 15 Minuten übertragen werden.

Das Anbietmittel kann dabei auch Teil der Ermittlungsvorrichtung und/oder des Prognosebestimmungsmittels sein und/oder Teil der zentralen Parksteuereinheit sein.

Außerdem weist der Windpark wenigstens einen steuerbaren Verbraucher auf, der auf Anforderung Leistung verbrauchen kann. Vorzugsweise sind mehrere steuerbare Verbraucher vorgesehen.

Für einen solchen Windpark wird nun vorgeschlagen, dass die Ermittlungsvorrichtung dazu eingerichtet ist, dass die Reduktionsprognoseleistung in Abhängigkeit der Prognoseleistung und in Abhängigkeit der steuerbaren Verbrauchsleistung bestimmt wird, besonders, wie oben beschrieben wurde. Dabei beschreibt die steuerbare Verbrauchsleistung, wie in dem Prognosezeitraum durch die in dem Windpark vorhandenen, steuerbaren Verbraucher auf Anforderung Leistung verbraucht werden kann.

Als steuerbarer Verbrauch kann auch ein Eigenbedarf der Windenergieanlage angesehen sein, der bspw. für Lüfter oder Heizer oder auch für Beleuchtung benötigt wird. Ein solcher Eigenbedarf kann für eine moderne Windenergieanlage bspw. bei 100 kW liegen und eine Verfügbarkeit von 100% haben.

Betriebspunktabhängig kann ein zusätzlicher Eigenbedarf von 100 kW angenommen werden, der abhängig vom Betriebspunkt der Windenergieanlage als Verbrauch zugeschaltet werden kann. Auch das kann als steuerbare Verbraucher Lüfter, Heizer oder Umrichterschränke, die in einem Stand-by-Modus sind, betreffen: Da diese Verbraucher zu einem geringen Teil ihrem eigentlichen Zweck gemäß benutzt werden und dann nicht beliebig als Verbraucher zum Reduzieren der eingespeisten bzw. einspeisbaren Leistung angesteuert werden, ist von einer reduzierten Verfügbarkeit auszugehen, die dennoch bei 98% liegen kann.

Als weitere Verbraucher können auch Wechselrichter bzw. Umrichter gesehen werden, die als Einspeisevorrichtung arbeiten. Wenn sie nicht voll ausgelastet sind, verbrauchen sie entsprechend weniger als bei Vollauslastung. Dieser Unterschied zur Vollauslastung kann auch als steuerbarer Verbrauch ausgenutzt werden. Dafür kann der Umrichter oder die Umrichter mehrere Windenergieanlagen bspw. durch gegenseitige kompensierte Blindleistungsbereitstellung betrieben werden, nämlich in einem STATCOM-Betrieb. Dadurch können pro moderne Windenergieanlage etwa 100 kW mit einer Verfügbarkeit von 90% genutzt werden. Hier ist dann jeweils der Umrichter und/oder die benutzte Leitung der steuerbare Verbraucher.

Als weiterer Verbraucher ist die Rotorblattheizung zu nennen, die auch einfach als Blattheizung bezeichnet werden kann und oben schon als Beispiel beschrieben wurde. Bei einer modernen Windenergieanlage können hierdurch, pro Windenergieanlage, betriebspunktabhängig etwa 500 kW mit einer Verfügbarkeit von 98% genutzt werden. Vorzugsweise ist der Windpark dazu eingerichtet, ein Verfahren gemäß wenigstens einer vorstehend beschriebenen Ausführungsform umzusetzen. Vorzugsweise weist der Windpark eine zentrale Parksteuereinheit auf, die die Einspeisevorrichtung, die Ermittlungsvorrichtung, das Prognosebestimmungsmittel und/oder das Anbietmittel beinhaltet oder damit kommuniziert bzw. für eine solche Kommunikation eingerichtet ist, insbesondere entsprechende Kommunikationsschnittstellen aufweist.

Vorzugsweise ist zum Ansteuern oder Koordinieren des Ansteuerns eines, mehrerer oder aller der steuerbaren Verbraucher eine zentrale Verbrauchssteuereinheit vorgesehen. Diese zentrale Verbrauchssteuereinheit ist vorzugsweise mit der zentralen Parksteuereinheit gekoppelt und dazu vorbereitet, einen gesamten Verbrauchsollwert von der zentralen Parksteuereinheit zu empfangen, der angibt, um welchen Wert der Verbrauch der steuerbaren Verbraucher insgesamt reduziert werden soll. Insbesondere weist die zentrale Verbrauchssteuereinheit dazu ein Kommunikationsmittel zum Kommunizieren mit der zentralen Parksteuereinheit auf. Alternativ ist die zentrale Verbrauchssteuereinheit Teil der zentralen Parksteuereinheit.

Gemäß einer Ausgestaltung ist wenigstens einer der Verbraucher als von extern schaltbarer Verbraucher ausgebildet, um von einer Steuereinrichtung im Windpark zum Leistungsverbrauch eingeschaltet zu werden. Ein solcher Verbraucher kann vereinfachend als schaltbarer Verbraucher bezeichnet werden. Außerdem oder alternativ ist wenigstens einer der Verbraucher als von extern in seiner Leistungsaufnahme steuerbarer Verbraucher ausgebildet, um von der Steuereinrichtung im Windpark zum Leistungsverbrauch mit einer in der Höhe einstellbaren Leistung gesteuert zu werden. Ein solcher Verbraucher kann vereinfachend als in der Höhe steuerbarer Verbraucher bezeichnet werden. Dabei ist darunter, dass der Verbraucher von extern geschaltet oder gesteuert werden kann, so zu verstehen, dass der Verbraucher nicht nur von sich selbst oder der Einrichtung, in der er verbaut ist, geschaltet oder angesteuert wird, sondern, dass er von einer Einrichtung im Windpark im Grunde fremdgesteuert wird und die Steuerung insoweit außerhalb des eigentlichen Anwendungsbereichs geschaltet bzw. gesteuert wird.

Die Steuereinrichtung kann die zentrale Parksteuereinheit oder die Verbrauchssteuereinheit sein. So kann bspw. die zentrale Parksteuereinheit dieses Schalten und/oder Steuern solcher Verbraucher mit übernehmen.

Um eine Leistungsreduzierung der vom Windpark eingespeisten Leistung genau einzustellen, können die schaltbaren Verbraucher die in der Höhe steuerbaren Verbraucher und die Windenergieanlagen in Bezug auf ihre erzeugte Leistung entsprechend angesteuert werden.

Um ein einfaches Beispiel zu nennen: Wenn ein Windpark 100kW Leistung erzeugt und einspeist und dann um 200kW seine eingespeiste Leistung reduzieren muss, kann er dafür einen schaltbaren Verbraucher mit 150kW zu schalten und die erzeugte Leistung um 50kW reduzieren. Die eingespeiste Leistung wird dann von +100kW auf -100kW reduziert, wobei der Windpark 50kW erzeugt und der schaltbare Verbraucher 150kW verbraucht.

Vorzugsweise weist der Windpark wenigstens einen Energiespeicher auf, um zumindest kurzfristig zusätzliche Leistung zur Windleistung, die durch die Windenergieanlagen des Windparks erzeugt wird, zum Einspeisen in das elektrische Versorgungsnetz bereitzustellen. Ein solcher Energiespeicher kann auch in einer Windenergieanlage enthalten sein oder es kann in mehreren oder allen Windenergieanlagen des Windparks jeweils ein solcher Energiespeicher vorgesehen sein. Dabei wird vorgeschlagen, dass der wenigstens eine Energiespeicher dazu vorbereitet ist, die zusätzliche Leistung auf Anforderung durch einen Netzbetreiber zu reduzieren. Außerdem ist er dazu vorbereitet, eine Information über seinen Ladezustand und/oder eine Vorhersage über in dem Prognosezeitraum reduzierbare Leistung bereitzustellen. Insbesondere ist er dazu vorbereitet, eine solche Information an die zentrale Parksteuereinheit zu übertragen.

Der wenigstens eine Energiespeicher kann somit nicht nur zusätzliche Leistung einspeisen, sondern diese kann auch auf Anforderung durch Netzbetreiber reduziert werden, so dass auf diese Art und Weise der Energiespeicher eine negative Regelleistung, insbesondere eine negative Minutenregelleistung bereitstellen kann. Dazu kann er außerdem eine entsprechende Information über seinen Ladezustand und seine Leistungsreduzierfähigkeit bereitstellen. Damit ist es möglich, dass für die Berechnung der Reduktionsprognoseleistung auch dieser Energiespeicher mit einbezogen werden kann.

Der Energiespeicher weist dazu insbesondere eine entsprechende Kommunikationsvorrichtung auf, um mit den relevanten Einrichtungen oder Mitteln im Windpark zu kommunizieren. Insbesondere wird vorgeschlagen, dass eine solche Kommunikation mit der zentralen Parksteuereinheit erfolgt, die darüber die betreffenden Informationen übertragen und weiterverarbeiten kann. Im Falle einer Reduktionsanforderung durch den Netzbetreiber kann diese insbesondere von einer Netzleitstelle an die zentrale Parksteuereinheit übertragen werden, wobei die zentrale Parksteuereinheit dann ein entsprechendes Reduktionssignal an den Energiespeicher übertragen kann.

Vorzugsweise sind die steuerbaren Verbraucher des Windparks ebenfalls zentral ansteuerbar, nämlich besonders über die zentrale Parksteuereinheit und/oder über die zentrale Verbrauchssteuereinheit und/oder über ein zentrales Datennetz.

Erfindungsgemäß wird auch eine Windenergieanlage gemäß Anspruch 17 vorgeschlagen. Diese arbeitet im Wesentlichen bzw. sinngemäß wie vorstehend zu Ausführungsformen eines Windparks beschrieben wurde.

Vorzugsweise ist die Windenergieanlage dazu vorbereitet, in einem gemäß wenigstens einer Ausführungsform vorstehend beschriebenen Windpark verwendet zu werden und/oder ein gemäß wenigstens einer Ausführungsform beschriebenes Verfahren auszuführen oder darin mitzuwirken. Sowohl die Verwendung in einem Windpark, als auch die Verwendung in einem beschriebenen Verfahren bedeutet besonders, dass die Windenergieanlage Informationen über ihren Betrieb und über ihre Verbraucher bereitstellt und/oder dass sie und/oder ihre steuerbaren Verbraucher zum Einstellen einer zu erzeugenden Leistung bzw. einer abzugebenden Leistung ansteuerbar sind bzw. dass etwaige schaltbare Verbraucher an- und ausgeschaltet werden können, nämlich durch eine externe Steuereinheit, die nicht Teil der Windenergieanlage oder des Verbrauchers ist.

Die Erfindung wird nun nachfolgend anhand von Ausführungsformen beispielhaft unter Bezugnahme auf die begleitenden Figuren näher erläutert.
- Figur 1: zeigt eine Windenergieanlage in einer perspektivischen Darstellung.
- Figur 2: zeigt einen erfindungsgemäßen Windpark in einer schematischen Darstellung.
- Figur 3: zeigt eine Struktur zur Bestimmung einer anbietbaren Reduktionsprognoseleistung.
- Figur 4: zeigt eine Struktur zur Steuerung eines Windparks zur Bereitstellung negativer Regelleistung.
- Figur 5: zeigt ein Leistungs-Zeit-Diagramm zur Erläuterung möglicher, eingespeister, verfügbarer oder angebotener Leistungen.
- Figur 6: zeigt ein Leistungs-Zeit-Diagramm ähnlich der Figur 5 aber mit einer Variation dazu.
- Figur 7: zeigt ein weiteres Leistungs-Zeit-Diagramm mit einer weiteren erläuternden Variation gegenüber den Figuren 5 und 6.

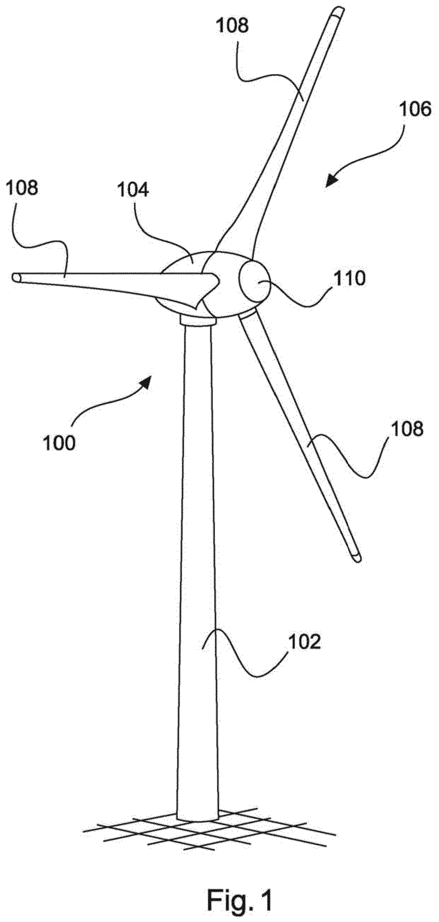

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

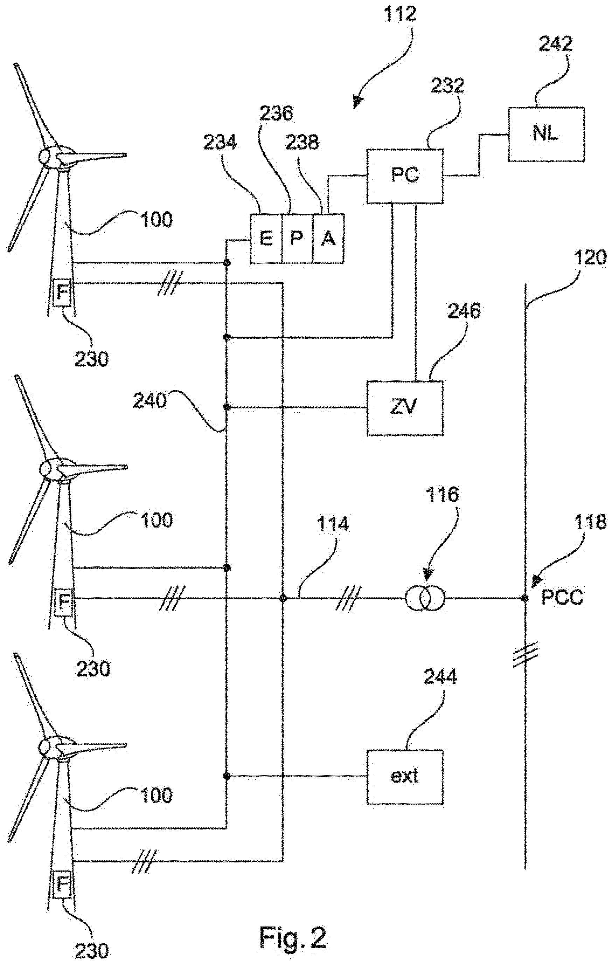

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise nur drei Windenergieanlagen zeigt, obwohl häufig mehr als drei Windenergieanlagen in einem Windpark vorhanden sind. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

Der Windpark 112 der Figur 2 speist mittels mehrerer Einspeisevorrichtungen 230 in das elektrische Versorgungsnetz 120 ein. Die Einspeisevorrichtungen 230 sind hierbei Teil der Windenergieanlagen 100. Jede Einspeisevorrichtung 230 kann beispielsweise ein Frequenzwechselrichter sein, der einen entsprechenden dreiphasigen Strom erzeugt, der über den Transformator 116 dann in das elektrische Versorgungsnetz 120 eingespeist wird. Zur Gesamtsteuerung des Windparks 112 ist einen zentrale Parksteuereinheit 232 vorgesehen. Weiterhin ist eine Ermittlungsvorrichtung 234 zum Ermitteln einer Prognoseleistung vorgesehen, die mit einem Prognosebestimmungsmittel 236 gekoppelt ist. Das Prognosebestimmungsmittel bestimmt eine Reduktionsprognoseleistung und diese kann durch das Anbietmittel 238 als negative Regelleistung angeboten werden. Die Begriffe Reduktionsprognoseleistung und negative Regelleistung können auch synonym verwendet werden. Die Ermittlungsvorrichtung 234, das Prognosebestimmungsmittel 236 und das Anbietmittel 238 können auch zu einer Einheit zusammengefasst sein, was in der Figur 2 angedeutet ist.

Als Basis für die Ermittlung der Prognoseleistung als auch zum Bestimmen der Reduktionsprognoseleistung dienen Informationen der Windenergieanlagen 100, die über das Datennetz 240 übertragen werden, nämlich insbesondere an die Ermittlungsvorrichtung 234 und darüber an das Prognosebestimmungsmittel 236. Die dabei ermittelten bzw. bestimmten Daten können an die zentrale Parksteuereinheit 232 beispielsweise von dem Anbietmittel 238 aus übertragen werden. Die Ermittlungsvorrichtung 234 und/oder das Prognosebestimmungsmittel 236 und/oder das Anbietmittel 238 können auch Teil der zentralen Parksteuereinheit 232 sein.

Besonders die bestimmte Reduktionsprognoseleistung kann dann von der zentralen Parksteuereinheit 232 einer Netzleitstelle 242 angeboten werden. Die Netzleitstelle 242 kann dann auch im Fall der Fälle, wenn eine entsprechende Netzstützung erforderlich erscheint, eine negative Regelleistung anfordern. Dies kann ebenfalls über eine Kommunikation mit der zentralen Parksteuereinheit 232 erfolgen. Die zentrale Parksteuereinheit 232 ist hierbei dazu vorgesehen, dass sie dann entsprechend die Windenergieanlagen 100 ansteuern kann bzw. entsprechende Sollwerte vorgeben kann. Dazu kann sie sich auch des Datennetzes 240 bedienen. Zusätzlich kommt in Betracht, dass die negative Regelleistung auch durch entsprechende Ansteuerung von Verbrauchern im Windpark 112 vorgenommen wird. Solche Verbraucher können Teil jeder Windenergieanlage 100 sein, wie beispielsweise Lüfter in der Windenergieanlage 100, die als solche bekannt sind und daher in Figur 2 nicht extra dargestellt sind. Es kommen aber auch externe Verbraucher in Betracht, für die hier ein externer Verbraucher 244 angedeutet ist. Die Ansteuerung und insbesondere auch Koordinierung der Verbraucher zum Abnehmen von Leistung und dadurch Bereitstellen negativer Regelleistung erfolgt durch eine zentrale Verbrauchssteuereinheit 246. Diese zentrale Verbrauchssteuereinheit 246 kann dafür auch über die zentrale Parksteuereinheit 232 angesteuert werden und die zentrale Verbrauchssteuereinheit 246 kann die Ansteuerung der Verbraucher, einschließlich des externen Verbrauchers 244 über das Datennetz 240 vornehmen.

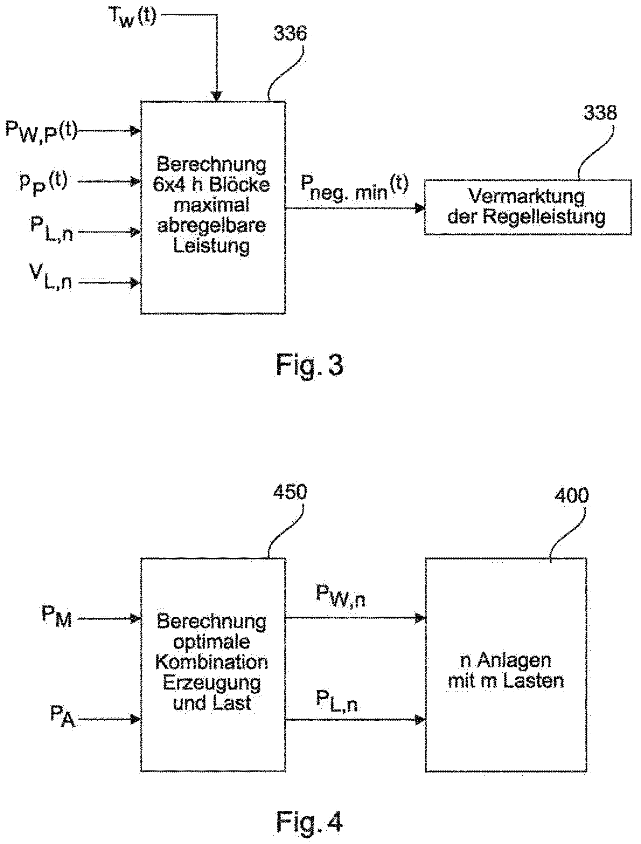

Figur 3 veranschaulicht in der gezeigten Struktur besonders das Prognosebestimmungsmittel 236 der Figur 2, das hier als Prognosebestimmungsblock 336 gezeigt ist. Der Prognosebestimmungsblock 336 erhält als Eingangsgrößen von einer Wetterprognose besonders die prognostizierten Temperaturwerte bzw. den prognostizierten Temperaturverlauf, der als T_{W}(t) in dem Prognosebestimmungsblock 336 eingeht. Die Temperatur kann beispielsweise den zu erwartenden Betrieb der Windenergieanlage beeinflussen. Im ungünstigsten Fall kann eine zu niedrige Temperatur zur Abschaltung der Anlage führen. In anderen Fällen wird die Anlage reduziert betrieben oder es wird eine Heizung betrieben.

Als weiterer Wert geht in Abhängigkeit einer Windvorhersage, die Teil der Wettervorhersage sein kann, eine prognostizierte Windleistung bzw. ein Verlauf der prognostizierten Windleistung ein, was hier als P_{W,P}(t) dargestellt ist.

Weiterhin geht eine Prognoseunsicherheit p_{P}(t) ein. Diese Prognoseunsicherheit hängt besonders von der Qualität und den Randbedingungen einer Wettervorhersage ab und kann als Wahrscheinlichkeitsverteilung angegeben werden. Sie resultiert oftmals in einen Wert von 3%. Das bedeutet, dass wenn 3% der prognostizierten Leistung alle Viertelstunde als negative Regelleistung angeboten wird, kann das mit einer Wahrscheinlichkeit von 99,98% der Viertelstundenwerte erreicht werden. Der Wert von 3% kann einen derzeit üblichen Wert darstellen, der aber besonders dann erhöht werden kann, wenn sich Vorhersagbarkeiten besonders des Windes verbessern, so dass eine Prognoseunsicherheit hier als Eingabegröße vorgesehen ist. Weiterhin geht für jeden Verbraucher in dem Windpark die ihn kennzeichnende Verbrauchsleistung P_{L,n} ein. Die kennzeichnende Leistung P_{L,n} kann besonders seine Nennleistung sein und/oder seine maximale Leistung. Dieser Wert ist eine kennzeichnende Größe und grundsätzlich ein fester Wert. Die Figur 3 zeigt dafür die eine Eingangsgröße P_{L,n}, die aber nur repräsentativ für die entsprechende Leistung jedes Verbrauchers steht. Das ist durch den Index n angedeutet. Es geht also ein solcher Wert für jeden berücksichtigten Verbraucher ein.

Weiterhin geht für jeden Verbraucher ein Verfügbarkeitswert V_{L,n} als relativer Wert ein, besonders als prozentualer Wert. Dieser gibt für jeden Verbraucher an, ob und in welcher Höhe dieser verfügbar ist. Der Wert kann von 0 bis 100% reichen, wobei 0% angibt, dass der Verbraucher nicht verfügbar ist, wohingegen 100% anzeigen, dass der Verbraucher in voller Höhe seiner kennzeichnenden Leistung P_{L,n} verfügbar ist.

Aus diesen Werten kann dann in dem Prognosebestimmungsblock 336 eine maximal abregelbare Leistung bestimmt werden, nämlich in dem Sinne, dass diese maximal abregelbare Leistung mit einer Sicherheit von 99,98% bereitgestellt werden kann. Eine solche Berechnung erfolgt jeweils für einen Zeitraum oder einen Zeitblock von 4 Stunden. Das Ergebnis ist dann eine von der Zeit abhängige maximal abregelbare Leistung P_{neg.min}(t), die der Reduktionsprognoseleistung entspricht bzw. synonym als Reduktionsprognoseleistung bezeichnet werden kann. Maximal abregelbare Leistung bedeutet hier, dass bis zu diesem Wert abgeregelt werden kann. Der Netzbetreiber, dem diese maximal abregelbare Leistung P_{neg.min}(t) angeboten wird, kann also hier bis zu diesem Wert abregeln bzw. eine Abregelung verlangen. Aufgrund von Sicherheitsüberlegungen und besonders unter Berücksichtigung von Prognoseunsicherheiten ist das aber die mindeste Leistung, die angeboten werden kann. Es könnte also beispielsweise bei besserer Prognose oder wenn eine geringere Sicherheit akzeptiert wird, noch mehr Regelleistung angeboten werden.

Diese maximal abregelbare Leistung P_{neg.min}(t) wird dann dem Anbietblock 338 zugeführt, der diese Regelleistung dann dem Netzbetreiber anbieten kann bzw. zur Netzstützung vermarkten kann. Insoweit betrifft der Anbietblock 338, der auch als Vermarktungsblock bezeichnet werden könnte, die Vermarktung der negativen Regelleistung.

Figur 4 erläutert, wie eine Erfüllung einer angeforderten negativen Regelleistung koordiniert wird, wenn eine solche negative Regelleistung tatsächlich auch angefordert wird. Dazu ist der Koordinierungsblock 450 vorgesehen. Dieser erhält als Eingangsgrößen den Leistungswert P_{M}, der angibt, wie viel Leistung der Windpark insgesamt erzeugen und einspeisen kann, und den Wert P_{A}, der angibt, um wie viel Leistung der Windpark abgeregelt werden soll, um wie viel Leistung der Windpark also weniger einspeisen soll. Beides sind Werte, die sich jeweils auf den Windpark insgesamt beziehen.

Der Koordinierungsblock 450 berechnet daraus dann für jede Windenergieanlage eine von ihr zu erzeugende und einzuspeisende Leistung P_{W,n}, und eine durch Verbrauch an der jeweiligen Anlage zu verbrauchende Leistung P_{L,n}. Dabei wird der Koordinierungsblock 450 möglichst einer optimalen Kombination zwischen erzeugter Leistung und verbrauchter Leistung berücksichtigen. Diese Ergebnisse, also die von jeder Anlage zu erzeugende und einzuspeisende Leistung P_{W,n} und die von jeder Windenergieanlage zu verbrauchende Leistung P_{L,n} werden dann an die jeweiligen Windenergieanlagen 400 übertragen und repräsentativ dazu ist nur ein Windenergieanlagenblock 400 gezeigt. Tatsächlich gehen aber in den Koordinierungsblock 450 zwei Größen ein und er gibt 2 • n Größen wieder aus.

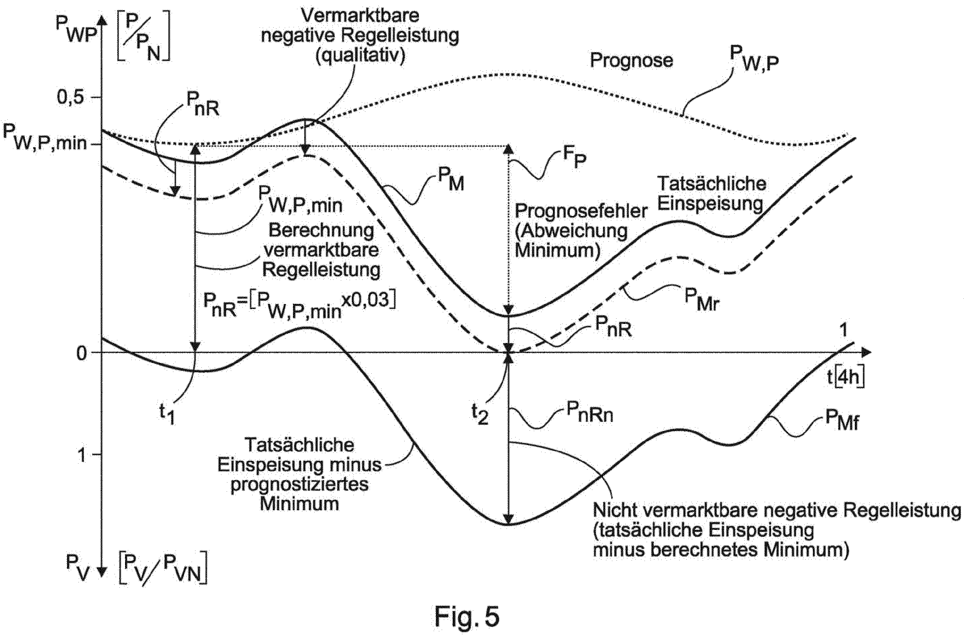

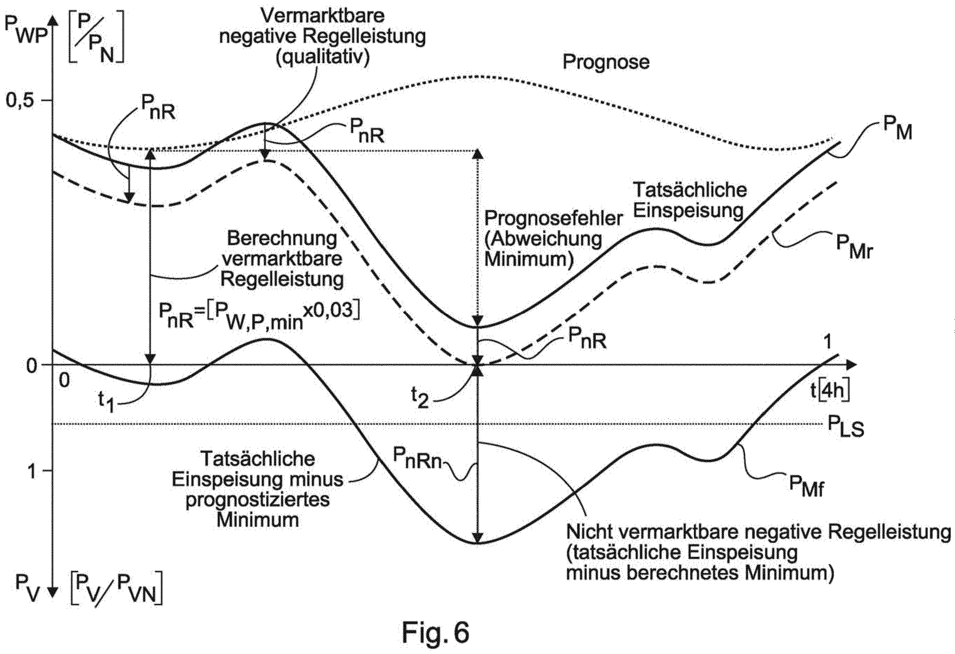

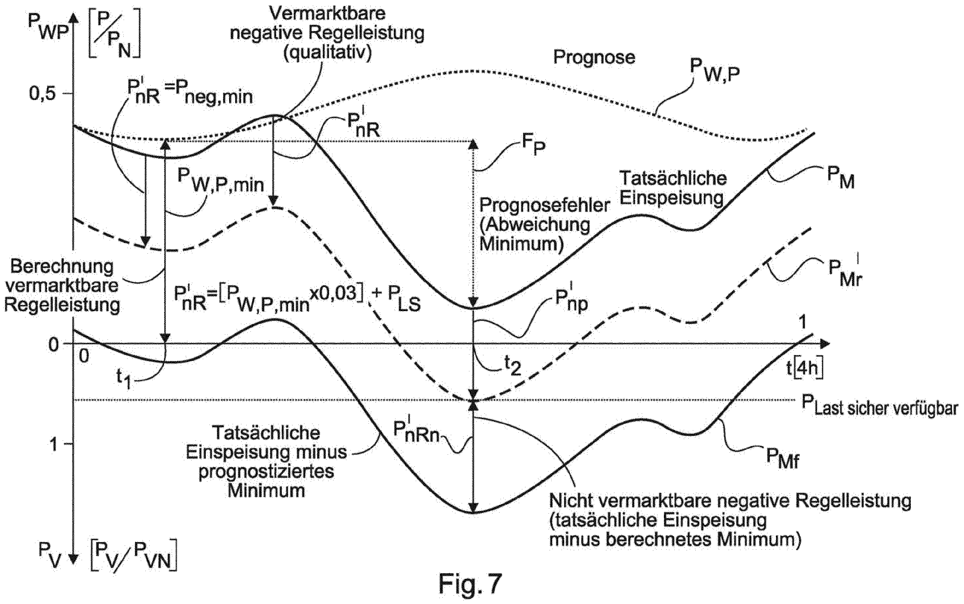

Figur 5 zeigt ein Leistungs-Zeit-Diagramm, in dem die durch den Windpark erzeugbare und einspeisbare Leistung P_{WP} in Abhängigkeit der Zeit darstellt. Das Diagramm zeigt insoweit die Leistung P_{WP} für den gesamten betrachteten Windpark. An der Ordinate ist als negativer Ast auch noch eine verfügbare Verbrauchsleistung P_{V} angegeben, die aber erst in dem modifizierten Diagramm der Figuren 6 und 7 relevant wird. Das vorliegende Diagramm, gleiches gilt für die Diagramme der Figuren 6 und 7, zeigt einen zeitlichen Ausschnitt über vier Stunden und damit über einen Zeitraum, über den eine negative Regelleistung grundsätzlich angeboten werden könnte. Grundsätzlich kann aber für einen längeren Zeitraum, beispielsweise für 24 Stunden, eine Prognose und auch eine Prognoseleistung und eine Reduktionsprognoseleistung angegeben werden. Dabei würde ein solcher Prognosezeitraum aber bevorzugt in mehrere 4-Stunden-Abschnitte aufgeteilt werden. Im Falle von 24 Stunden, würde dieser Bereich also in sechs Bereiche zu je vier Stunden eingeteilt werden.

Das vorliegende Diagramm zeigt mit dem gepunkteten Graphen eine Möglichkeit für eine Prognoseleistung P_{W,P}. Diese Prognoseleistung P_{W,P} hängt von einer Wettervorhersage ab, insbesondere von einer Windvorhersage. Zum Zeitpunkt t₁ nimmt die Prognoseleistung P_{W,P} einen minimalen Wert an, was als P_{W,P,min} eingezeichnet ist. Von diesem minimalen Wert der Prognoseleistung geht die Berechnung einer vermarktbaren negativen Regelleistung aus. Eine solche vermarktbare negative Regelleistung P_{nR} berechnet sich beispielsweise als 3% der minimalen Prognoseleistung P_{W,P,min}. Die vermarktbare negative Regelleistung entspricht somit auch der Reduktionsprognoseleistung. Zur Veranschaulichung ist dann in Figur 5 die tatsächlich zur Einspeisung verfügbare Leistung P_{M} als durchgezogene Linie eingezeichnet. Die vermarktbare negative Regelleistung P_{nR} ist hier veranschaulicht als eine Verschiebung, nämlich Absenkung der tatsächlich verfügbaren Leistung P_{M} zur gestrichelt dargestellten reduziert eingespeisten Leistung P_{Mr}. Entsprechend ist der Abstand der tatsächlich verfügbaren Leistung P_{M} zu der im Fall einer Netzstützungsanforderung reduziert eingespeisten Leistung P_{Mr} die vermarktbare negative Regelleistung P_{nR}. Im gezeigten Beispiel sollte dieser Abstand 3% der minimalen Prognoseleistung P_{W,P,min} aufweisen und ist nur zum Zwecke der besseren Darstellung in dieser und auch der nächsten Darstellung vergrößert dargestellt.

Die Figur 5 zeigt zur Veranschaulichung den Sonderfall, dass die tatsächlich verfügbare Leistung P_{M} zum Zeitpunkt t₂ so weit abgefallen ist, dass sie nur noch den Wert der vermarktbaren negativen Regelleistung P_{nR} aufweist. Tatsächlich wird diese negative Regelleistung P_{nR} als die beschriebenen 3% von der minimalen Prognoseleistung P_{W,P,min} gewählt, um mit einer Sicherheit von 99,98% auszuschließen, dass die tatsächlich verfügbare Leistung P_{M} tiefer in einem Viertelstundenintervall abfällt. Üblicherweise wird also die tatsächlich verfügbare Leistung P_{M} nur in 0,02 % der betrachteten 15-MinutenIntervalle im Jahr soweit abfallen und auch die reduziert einspeisbare Leistung P_{Mr} wird nur in 0,02 % der Viertelstunden in die Nähe der Null-Linie kommen.

Jedenfalls ist der Abstand bzw. die Differenz dieses minimalen Wertes der verfügbaren Leistung P_{M} zur minimalen Prognoseleistung P_{W,P,min} als Prognosefehler F_{P} anzusehen. Weil ein großer Prognosefehler auftreten kann, wird entsprechend konservativ die vermarktbare negative Regelleistung P_{nR} berechnet. Dazu soll Figur 5 veranschaulichen, dass trotz eines solchen nicht-prognostizierten starken Abfalls der tatsächlich verfügbaren Leistung P_{M} die reduzierte Leistung P_{Mr} dennoch nicht negativ wird. Das ist der Grund, warum der bereits erläuterte konservative Faktor von 3% häufig gewählt wird.

Zur Veranschaulichung ist eine fingierte einzuspeisende Leistung P_{Mf} eingezeichnet. Diese fingierte Einspeiseleistung P_{Mf} ist eine Verschiebung bzw. Absenkung der tatsächlich verfügbaren Leistung P_{M} um den vollständigen Wert der minimalen Prognoseleistung P_{W,P,min}. Dies veranschaulicht den Fall, wenn für dieselbe Situation als vermarktbare negative Regelleistung unmittelbar die minimale Prognoseleistung P_{W,P,min} verwendet worden wäre, also nicht 3% davon, sondern 100%. Dann würde nämlich im Fall der Fälle, wenn eine solche große Regelleistung eingefordert werden würde, die reduzierte, einspeisbare Leistung diesen Wert der fingierten Einspeiseleistung P_{Mf} annehmen. Es ist leicht erkennbar, dass hierbei die reduziert einzuspeisende Leistung negativ werden würde und somit durch eine Reduzierung der eingespeisten Leistung nicht realisiert werden könnte, weil eine eingespeiste Leistung nur auf den Wert null reduziert werden kann.

Entsprechend ist diese negative Leistung bzw. der negative Anteil der Leistung nicht vermarktbar und dieser Wert ist zur Veranschaulichung zu der fingierten Einspeiseleistung P_{Mf} zu dem Zeitpunkt t₂ als Abstand zur Null-Achse eingezeichnet. Diese nichtvermarktbare negative Regelleistung ist als P_{nRn} eingezeichnet.

Zur Lösung wurde nun erfindungsgemäß erkannt und vorgeschlagen, auch Verbrauchsleistungen von Verbrauchern im Windpark zu berücksichtigen. Eine solche Verbrauchsleistung P_{LS}, die sicher verfügbar ist, ist in der Figur 6, die ansonsten der Figur 5 entspricht, eingezeichnet. Diese sicher verfügbare Verbrauchsleistung P_{LS} ist hier der Einfachheit halber als waagerechte Linie eingezeichnet. Tatsächlich kann aber die sicher verfügbare Verbrauchsleistung auch schwanken, aus Gründen die oben auch schon erläutert wurden. Die Schwankung dürfte aber bei der sicher verfügbaren Verbrauchsleistung P_{LS} im Vergleich zur Prognoseleistung P_{W,P} gering sein. Alternativ kann hier auch ein konstanter Wert für die sicher verfügbare Verbrauchsleistung P_{LS} angenommen werden, nämlich der für den betrachteten 4-Stunden-Zeitabschnitt dem Betrag nach kleinste Wert, wenn von Schwankungen ausgegangen wird.

Figur 7 erläutert nun, wie diese sicher verfügbare Verbrauchsleistung die vermarktbare negative Regelleistung verbessern, nämlich dem Betrage nach vergrößern kann. Dies wird dadurch veranschaulicht, dass die reduzierte, einspeisbare, momentane Leistung P_{Mr} um diesen Wert der sicher verfügbaren Verbrauchsleistung P_{LS} verschoben werden kann, nämlich im Ergebnis so, dass die so veränderte, reduzierte, einspeisbare Leistung P_{Mr'} die gerade sicher verfügbare Verbrauchsleistung P_{LS} berührt. Dadurch ergibt sich eine deutlich erhöhte vermarktbare negative Regelleistung P_{nR'}, die der negativen Regelleistung P_{neg,min}(t) des Strukturbildes der Figur 3 entspricht. Dies ist in der Figur 7 angedeutet, aber ohne die zeitliche Abhängigkeit. Die zeitliche Abhängigkeit ist besonders zu verstehen als dass dieser Wert für unterschiedliche 4-Stunden-Zeitabschnitte unterschiedlich aussehen kann. Figur 7 zeigt aber nur einen 4-Stunden-Ausschnitt und für den wird diese vermarktbare negative Regelleistung P_{neg,min} als konstanter Wert angesetzt.

Im Ergebnis ist damit auch die nicht vermarktbare negative Regelleistung P_{nRn'} dem Betrage nach kleiner als für den Fall der Figur 5.

Es wurde erkannt, dass durch Prognosefehler die tatsächliche Einspeisung geringer ausfallen kann als die prognostizierte Einspeisung. Dasselbe gilt für die verfügbare negative Regelleistung, weil diese von der Einspeisung abhängt.

Die vorgeschlagene Lösung ist besonders wichtig, damit sich ein solcher Windpark zur Regelleistungsbereitstellung eignet.

Für eine Präqualifizierung von Kraftwerken, einschließlich Windparks, zur Regelleistungsbereitstellung muss die verfügbare und somit spontan abregelbare Leistung nachgewiesen werden. Dazu wird häufig eine Sicherheit von 99% oder sogar 99,98% verlangt. Es muss dafür also mit einer Verlässlichkeit von 99% bzw. 99,98% regelmäßig nachgewiesen werden, dass die angebotene Regelleistung auch geliefert werden kann. Eine solche Regelleistung kann angeboten und vergütet werden, wobei die Vergütung über die angebotene Regelleistung bestimmt wird. Es kommt also nicht auf die abgerufene, sondern auf die angebotene Regelleistung an.

Mit der heutigen Prognosegüte können nur ca. 3 % der prognostizierten Einspeiseleistung auch als Regelleistung angeboten werden, was sich aus der Berücksichtigung der Wahrscheinlichkeit von Prognosefehlern ergibt.

Es wurde erkannt, dass durch den Betrieb interner Verbraucher einer Windenergieanlage oder des Windparks die Menge der anzubietenden Regelleistung deutlich erhöht werden kann.

In einem Beispiel können statt -126kW, die sich als 3% einer Nennleistung berechnet (-4.200kW*0,03) -892kW angeboten und damit auch verkauft werden, wenn zusätzlich 766kW durch steuerbare Verbraucher berücksichtigt werden können (-4.200kW*0,03 - 766kW).

Dazu wird vorgeschlagen, dass eine erste technische Einrichtung dazu die minimal gesicherte Regelleistung in den entsprechenden Zeitslots unter Berücksichtigung des Wetters, der Windprognose und der Lasten bestimmt.

Eine weitere technische Einrichtung steuert die einzelnen Anlagen und Verbraucher im Windpark zur Realisierung der Regelleistungsanforderung. Durch ein Verfahren zur Kombination von diskreten Verbrauchern und steuerbarer Einspeisung ist es möglich, den geforderten Lastverlauf nachzufahren, also zu realisieren.

## Patentansprüche

1. Verfahren zum Betreiben eines mehrere Windenergieanlagen (100) aufweisenden Windparks (112) oder einer Windenergieanlage (100) zum Einspeisen elektrischer Leistung in ein elektrisches Versorgungsnetz (120), umfassend die Schritte:
- Einspeisen elektrischer Leistung in das elektrische Versorgungsnetz (120),
- Ermitteln einer Prognoseleistung (P_{W,P}), die eine in einem vorbestimmten, zukünftigen Prognosezeitraum durch den Windpark (112) bzw. die Windenergieanlage (100) einspeisbare Leistung beschreibt,
- Bestimmen einer Reduktionsprognoseleistung (P_{nR}), die für den Prognosezeitraum eine Leistung bezeichnet, um die die im Prognosezeitraum eingespeiste Leistung (P_{M}) reduziert werden kann, und
- Anbieten der Reduktionsprognoseleistung (P_{nR}) als negative Regelleistung,
wobei
- die Reduktionsprognoseleistung (P_{nR})
- in Abhängigkeit der Prognoseleistung (P_{M}) und
- in Abhängigkeit einer steuerbaren Verbrauchsleistung, bestimmt wird, wobei die steuerbare Verbrauchsleistung eine Leistung beschreibt, die in dem Prognosezeitraum durch in dem Windpark (112) bzw. in der Windenergieanlage vorhandene, steuerbare Verbraucher (244) auf Anforderung verbraucht werden kann,
**dadurch gekennzeichnet, dass**
die eingespeiste Leistung (P_{M}) auf eine Anforderung zur Netzstützung in dem Prognosezeitraum um einen Wert bis zur Höhe der Reduktionsprognoseleistung (P_{nR}) reduziert wird und
die Reduktionsprognoseleistung (P_{nR}) so bestimmt wird, dass sie sich additiv wenigstens zusammensetzt aus
- der Produktionsleistung (P_{W,P}) oder einem Wert davon, insbesondere einem Minimalwert davon, multipliziert mit einem vorgebbaren Gütewert, und
- der steuerbaren Verbrauchsleistung, wobei zur Bestimmung der steuerbaren Verbrauchsleistung jeweils eine prognostizierte Verfügbarkeit des jeweiligen steuerbaren Verbrauchers (244) berücksichtigt wird.

2. Verfahren nach Anspruch 1,
**dadurch gekennzeichnet, dass**
einer oder mehrere der steuerbaren Verbraucher (244) eingeschaltet werden und/oder in ihrer Leistungsabnahme gesteuert werden, so dass dadurch die eingespeiste Leistung (P_{M}) reduziert wird, wobei zusätzlich Leistung aus dem elektrischen Versorgungsnetz (120) entnommen und verbraucht wird, wenn die eingespeiste, noch nicht reduzierte Leistung (P_{M}) geringer als die Reduktionsprognoseleistung (P_{nR})ist und geringer als eine angeforderte Reduktionsleistung ist.

3. Verfahren nach Anspruch 1 oder 2,
**dadurch gekennzeichnet, dass**
sich die steuerbare Verbrauchsleistung
- aus mehreren Teilleistungen zusammensetzt ist, wobei
- jede Teilleistung einem steuerbaren Verbraucher (244) zugeordnet ist und
- sich eine, mehrere oder alle der Teilleistungen jeweils
- aus einer maximalen Leistung ihres steuerbaren Verbrauchers (244),
- multipliziert, mit einer prognostizierten Verfügbarkeit ihres steuerbaren Verbrauchers (244) berechnet.

4. Verfahren nach einem der vorstehenden Ansprüche,
**dadurch gekennzeichnet, dass**
die steuerbaren Verbraucher (244) durch eine zentrale Parksteuereinheit (232) des Windparks (112) angesteuert werden und/oder die zentrale Parksteuereinheit (232) von einer Netzleitstelle (242), die zur Steuerung des elektrischen Versorgungsnetzes (120) vorgesehen ist, ein Anforderungssignal als eine bzw. die Anforderung zur Netzstützung erhält und in Abhängigkeit dieser Anforderung die eingespeiste Leistung (P_{M}) reduziert und ggf. die steuerbaren Verbraucher (244) entsprechend ansteuert.

5. Verfahren nach einem der vorstehenden Ansprüche,
**dadurch gekennzeichnet, dass**
- wenigstens ein Energiespeicher im Windpark (112) bzw. der Windenergieanlage (100) vorhanden ist, um zumindest kurzfristig zusätzliche Leistung zur Windleistung, die durch die Windenergieanlagen (100) des Windparks (112) bzw. die Windenergieanlage (100) erzeugt wird, zum Einspeisen in das elektrische Versorgungsnetz (120) bereitzustellen, wobei
- die Reduktionsprognoseleistung (P_{nR}) zusätzlich in Abhängigkeit verfügbarer Leistung des wenigstens einen Energiespeichers bestimmt wird.

6. Verfahren nach einem der vorstehenden Ansprüche,
**dadurch gekennzeichnet, dass**
die Reduktionsprognoseleistung (P_{nR}) als negative Minutenregelleistung verwendet wird.

7. Verfahren nach einem der vorstehenden Ansprüche,
**dadurch gekennzeichnet, dass**
zum Ansteuern oder Koordinieren des Ansteuerns eines, mehrerer oder aller der steuerbaren Verbraucher (244) eine zentrale Verbrauchssteuereinheit (246) vorgesehen ist, wobei die zentrale Verbrauchssteuereinheit (246) vorzugsweise mit einer bzw. der zentralen Parksteuereinheit (232) gekoppelt ist und einen gesamten Verbrauchssollwert von der zentralen Parksteuereinheit (232) erhält, der angibt, um welchen Wert der Verbrauch der steuerbaren Verbraucher (244) insgesamt reduziert werden soll.

8. Verfahren nach einem der vorstehenden Ansprüche,
**dadurch gekennzeichnet, dass**
die Prognoseleistung (P_{W,P}) und/oder die Reduktionsprognoseleistung (P_{nR}) als zeitlicher Verlauf über den Prognosezeitraum angegeben werden.

9. Verfahren nach einem der vorstehenden Ansprüche,
**dadurch gekennzeichnet, dass**
- der Prognosezeitraum 12 bis 48 Stunden, vorzugsweise 18 bis 36 Stunden, insbesondere etwa 24 Stunden beträgt und/oder
- der Prognosezeitraum in 4-Stunden-Zeitabschnitte unterteilt ist und/oder
- der Prognosezeitraum in 15-Minutenintervalle unterteilt ist.

10. Windpark (112) mit mehreren Windenergieanlagen (100) zum Einspeisen elektrischer Leistung in ein elektrisches Versorgungsnetz (120), umfassend:
- eine Einspeisevorrichtung (230) zum Einspeisen elektrischer Leistung in das elektrische Versorgungsnetz (120),
- eine Ermittlungsvorrichtung (234) zum Ermitteln einer Prognoseleistung (P_{W,P}) , die eine in einem vorbestimmten, zukünftigen Prognosezeitraum durch den Windpark (112) einspeisbare Leistung beschreibt,
- ein Prognosebestimmungsmittel (236) zum Bestimmen einer Reduktionsprognoseleistung (P_{nR}) , die für den Prognosezeitraum eine Leistung bezeichnet, um die die im Prognosezeitraum eingespeiste Leistung reduziert werden kann,und
- ein Anbietmittel (238) zum Anbieten der Reduktionsprognoseleistung (P_{nR}) als negative Regelleistung,
- wenigstens einen steuerbaren Verbraucher (244), der auf Anforderung Leistung verbrauchen kann wobei
- die Ermittlungsvorrichtung (234) dazu eingerichtet ist,
- dass die Reduktionsprognoseleistung (P_{nR}) in Abhängigkeit der Prognoseleistung (P_{W,P}) und
- in Abhängigkeit einer steuerbaren Verbrauchsleistung, bestimmt wird, wobei die steuerbare Verbrauchsleistung eine Leistung beschreibt, die in dem Prognosezeitraum durch den wenigstens einen in dem Windpark (112) vorhandenen, steuerbaren Verbraucher (244) auf Anforderung verbraucht werden kann
**dadurch gekennzeichnet, dass**
die eingespeiste Leistung (P_{M}) auf eine Anforderung zur Netzstützung in dem Prognosezeitraum um einen Wert bis zur Höhe der Reduktionsprognoseleistung (P_{nR}) reduziert wird und
die Reduktionsprognoseleistung (P_{nR}) so bestimmt wird, dass sie sich additiv wenigstens zusammensetzt aus
- der Produktionsleistung (P_{W,P}) oder einem Wert davon, insbesondere einem Minimalwert davon, multipliziert mit einem vorgebbaren Gütewert, und
- der steuerbaren Verbrauchsleistung, wobei zur Bestimmung der steuerbaren Verbrauchsleistung jeweils eine prognostizierte Verfügbarkeit des jeweiligen steuerbaren Verbrauchers (244) berücksichtigt wird.

11. Windpark (112) nach Anspruch 10,
**dadurch gekennzeichnet, dass**
er dazu vorbereitet ist, ein Verfahren nach einem der Ansprüche 1 bis 19 auszuführen, insbesondere dass er eine zentrale Parksteuereinheit (232) aufweist und die zentrale Parksteuereinheit (232) das Verfahren ganz oder teilweise ausführt.

12. Windpark nach Anspruch 10 oder 11,
**dadurch gekennzeichnet, dass**
zum Ansteuern oder Koordinieren des Ansteuerns eines, mehrerer oder aller der steuerbaren Verbraucher (244) eine zentrale Verbrauchssteuereinheit (246) vorgesehen ist, wobei die zentrale Verbrauchssteuereinheit (246) vorzugsweise mit einer bzw. der zentralen Parksteuereinheit (232) gekoppelt ist und dazu vorbereitet ist, einen gesamten Verbrauchssollwert von der zentralen Parksteuereinheit (232) zu empfangen, der angibt, um welchen Wert der Verbrauch der steuerbaren Verbraucher insgesamt reduziert werden soll.

13. Windpark nach einem der Ansprüche 10 bis 12,
**dadurch gekennzeichnet, dass**
- wenigstens einer der Verbraucher als von extern schaltbarer Verbraucher ausgebildet ist, um von einer Steuereinrichtung im Windpark, zum Leistungsverbrauch eingeschaltet zu werden, und/oder
- wenigstens einer der Verbraucher als von extern in seiner Leistungsaufnahme steuerbarer Verbraucher ausgebildet ist, um von der Steuereinrichtung im Windpark, zum Leistungsverbrauch mit einer in der Höhe einstellbaren Leistung gesteuert zu werden, und wobei
die Steuereinrichtung vorzugsweise als eine bzw. die zentrale Parksteuereinheit und/oder als eine bzw. die Verbrauchssteuereinheit ausgebildet ist.

14. Windpark (112) nach einem der Ansprüche 10 bis 13,
**dadurch gekennzeichnet, dass**
- wenigstens ein Energiespeicher im Windpark (112) vorhanden ist, um zumindest kurzfristig zusätzliche Leistung zur Windleistung, die durch die Windenergieanlagen (100) des Windparks (112) erzeugt wird, zum Einspeisen in das elektrische Versorgungsnetz (120) bereitzustellen, wobei der wenigstens eine Energiespeicher dazu vorbereitet ist,
- die zusätzliche Leistung auf Anforderung durch einen Netzbetreiber zu reduzieren und
- eine Information über seinen Ladezustand und/oder eine Vorhersage über in dem Prognosezeitraum reduzierbare Leistung bereitzustellen, insbesondere an die zentrale Parksteuereinheit (232) zu übertragen.

15. Windenergieanlage (100) zum Einspeisen elektrischer Leistung in ein elektrisches Versorgungsnetz (120), umfassend:
- eine Einspeisevorrichtung (230) zum Einspeisen elektrischer Leistung in das elektrische Versorgungsnetz (120),
- eine Ermittlungsvorrichtung (234) zum Ermitteln einer Prognoseleistung (P_{W,P}), die eine in einem vorbestimmten, zukünftigen Prognosezeitraum durch die Windenergieanlage (112) einspeisbare Leistung beschreibt,
- ein Prognosebestimmungsmittel (236) zum Bestimmen einer Reduktionsprognoseleistung (P_{nR}), die für den Prognosezeitraum eine Leistung bezeichnet, um die die im Prognosezeitraum eingespeiste Leistung reduziert werden kann,und
- ein Anbietmittel (238) zum Anbieten der Reduktionsprognoseleistung (P_{nR}) als negative Regelleistung,
- wenigstens einen steuerbaren Verbraucher (244), der auf Anforderung Leistung verbrauchen kann wobei
- die Ermittlungsvorrichtung (234) dazu eingerichtet ist,
- dass die Reduktionsprognoseleistung (P_{nR}) in Abhängigkeit der Prognoseleistung (P_{W,P}) und
- in Abhängigkeit einer steuerbaren Verbrauchsleistung, bestimmt wird, wobei die steuerbare Verbrauchsleistung eine Leistung beschreibt, die in dem Prognosezeitraum durch den wenigstens einen in der Windenergieanlage (100) vorhandenen, steuerbaren Verbraucher (244) auf Anforderung verbraucht werden kann
**dadurch gekennzeichnet, dass**
die eingespeiste Leistung (P_{M}) auf eine Anforderung zur Netzstützung in dem Prognosezeitraum um einen Wert bis zur Höhe der Reduktionsprognoseleistung (P_{nR}) reduziert wird und
die Reduktionsprognoseleistung (P_{nR}) so bestimmt wird, dass sie sich additiv wenigstens zusammensetzt aus
- der Produktionsleistung (P_{W,P}) oder einem Wert davon, insbesondere einem Minimalwert davon, multipliziert mit einem vorgebbaren Gütewert, und
- der steuerbaren Verbrauchsleistung, wobei zur Bestimmung der steuerbaren Verbrauchsleistung jeweils eine prognostizierte Verfügbarkeit des jeweiligen steuerbaren Verbrauchers (244) berücksichtigt wird.

16. Windenergieanlage (100), insbesondere nach Anspruch 15, dazu vorbereitet, in einem Windpark (112) nach einem der Ansprüche 10 bis 14 verwendet zu werden und/oder ein Verfahren nach einem der Ansprüche 1 bis 9 auszuführen oder darin mitzuwirken.

## Claims

1. A method for operating a wind farm (112) having a plurality of wind power installations (100) or a wind power installation (100) for feeding electrical power into an electrical supply grid (120), comprising the steps of:
- feeding electrical power into the electrical supply grid (120),
- identifying a forecast power (P_{W,P}), which describes a power that can be fed in in a predetermined, future forecast period by the wind farm (112) or the wind power installation (100),
- determining a reduction forecast power (P_{nR}), which denotes, for the forecast period, a power by which the power (P_{M}) fed in in the forecast period can be reduced, and
- supplying the reduction forecast power (P_{nR}) as negative control power,
wherein
- the reduction forecast power (P_{nR}) is determined
- depending on the forecast power (P_{M}) and
- depending on a controllable consumption power, wherein the controllable consumption power describes a power that can be consumed on demand in the forecast period by controllable consumers (244) present in the wind farm (112) or in the wind power installation,
**characterized in that**
the infed power (P_{M}) is reduced by a value up to the level of the reduction forecast power (P_{nR}) in response to a demand for grid support in the forecast period and
the reduction forecast power (P_{nR}) is determined so that it is additively at least made up of
- the production power (P_{W,P}) or a value thereof, in particular a minimum value thereof, multiplied by a prescribable quality value, and
- the controllable consumption power, wherein in each case a forecast availability of the respective controllable consumer (244) is taken into account to determine the controllable consumption power.

2. The method as claimed in claim 1,
**characterized in that**
one or more of the controllable consumers (244) are switched on and/or the power consumption thereof is controlled so that the infed power (P_{M}) is reduced as a result, wherein power is additionally drawn from the electrical supply grid (120) and is consumed when the infed power (P_{M}) that has not yet been reduced is lower than the reduction forecast power (P_{nR}) and is lower than a demanded reduction power.

3. The method as claimed in claim 1 or 2,
**characterized in that**
the controllable consumption power
- is made up of a plurality of power proportions, wherein
- each power proportion is associated with a controllable consumer (244) and
- one, several or all of the power proportions is/are calculated in each case
- from a maximum power of the controllable consumer (244) thereof
- multiplied by a forecast availability of the controllable consumer (244) thereof.

4. The method as claimed in one of the preceding claims,
**characterized in that**
the controllable consumers (244) are actuated by a central farm control unit (232) of the wind farm (112) and/or the central farm control unit (232) receives a demand signal as a or the demand for grid support from a grid control station (242) provided to control the electrical supply grid (120), and, depending on said demand, reduces the infed power (P_{M}) and, where necessary, actuates the controllable consumers (244) accordingly.

5. The method as claimed in one of the preceding claims,
**characterized in that**
- at least one energy store is present in the wind farm (112) or the wind power installation (100) in order to provide at least temporarily additional power to the wind power generated by the wind power installations (100) of the wind farm (112) or the wind power installation (100) for feeding into the electrical supply grid (120), wherein
- the reduction forecast power (P_{nR}) is additionally determined depending on available power of the at least one energy store.

6. The method as claimed in one of the preceding claims,
**characterized in that**
the reduction forecast power (P_{nR}) is used as negative minutes control power.

7. The method as claimed in one of the preceding claims,
**characterized in that**
a central consumption control unit (246) is provided to actuate or to coordinate the actuation of one, several or all of the controllable consumers (244), wherein the central consumption control unit (246) is preferably coupled to a or the central farm control unit (232) and receives a total consumption setpoint value from the central farm control unit (232), said total consumption setpoint value indicating the value by which the consumption of the controllable consumers (244) should be reduced overall.

8. The method as claimed in one of the preceding claims,
**characterized in that**
the forecast power (P_{W,P}) and/or the reduction forecast power (P_{nR}) are given as a time profile over the forecast period.

9. The method as claimed in one of the preceding claims,
**characterized in that**
- the forecast period is 12 to 48 hours, preferably 18 to 36 hours, in particular approximately 24 hours and/or
- the forecast period is divided into 4-hour time periods and/or
- the forecast period is divided into 15-minute intervals.

10. A wind farm (112) having a plurality of wind power installations (100) for feeding electrical power into an electrical supply grid (120), comprising:
- an infeed apparatus (230) for feeding electrical power into the electrical supply grid (120),
- an identification apparatus (234) for identifying a forecast power (P_{W,P}), which describes a power that can be fed in in a predetermined, future forecast period by the wind farm (112),
- a forecast determination means (236) for determining a reduction forecast power (P_{nR}), which denotes, for the forecast period, a power by which the power fed in in the forecast period can be reduced, and
- a supply means (238) for supplying the reduction forecast power (P_{nR}) as negative control power,
- at least one controllable consumer (244), which can consume power on demand, wherein
- the identification apparatus (234) is configured
- such that the reduction forecast power (P_{nR}) is determined depending on the forecast power (P_{W,P}) and
- depending on a controllable consumption power, wherein the controllable consumption power describes a power that can be consumed on demand in the forecast period by the at least one controllable consumer (244) present in the wind farm (112),
**characterized in that**
the infed power (P_{M}) is reduced by a value up to the level of the reduction forecast power (P_{nR}) in response to a demand for grid support in the forecast period and
the reduction forecast power (P_{nR}) is determined so that it is additively at least made up of
- the production power (P_{W,P}) or a value thereof, in particular a minimum value thereof, multiplied by a prescribable quality value, and
- the controllable consumption power, wherein in each case a forecast availability of the respective controllable consumer (244) is taken into account to determine the controllable consumption power.

11. The wind farm (112) as claimed in claim 10,
**characterized in that**
said wind farm is prepared to execute a method as claimed in one of claims 1 to 11, in particular **in that** it has a central farm control unit (232) and the central farm control unit (232) executes the method in full or in part.

12. The wind farm as claimed in claim 10 or 11,
**characterized in that**
a central consumption control unit (246) is provided to actuate or to coordinate the actuation of one, several or all of the controllable consumers (244), wherein the central consumption control unit (246) is preferably coupled to a or the central farm control unit (232) and is prepared to receive a total consumption setpoint value from the central farm control unit (232), said total consumption setpoint value indicating the value by which the consumption of the controllable consumers should be reduced overall.

13. The wind farm as claimed in one of claims 10 to 12,
**characterized in that**
- at least one of the consumers is configured as an externally switchable consumer in order to be switched on by a control device in the wind farm for the purpose of power consumption, and/or
- at least one of the consumers is configured as a consumer whose power take-up can be controlled externally in order to be controlled by the control device in the wind farm for the purpose of power consumption with a power whose level can be adjusted, and wherein
the control device is preferably configured as a or the central farm control unit and/or as a or the consumption control unit.

14. The wind farm (112) as claimed in one of claims 10 to 13,
**characterized in that**
- at least one energy store is present in the wind farm (112) in order to provide at least temporarily additional power to the wind power generated by the wind power installations (100) of the wind farm (112) for feeding into the electrical supply grid (120), wherein the at least one energy store is prepared
- to reduce the additional power on demand by a grid operator and
- to provide a piece of information about the state of charge thereof and/or a prediction about power that can be reduced in the forecast period, in particular to transmit same to the central farm control unit (232).

15. A wind power installation (100) for feeding electrical power into an electrical supply grid (120), comprising:
- an infeed apparatus (230) for feeding electrical power into the electrical supply grid (120),
- an identification apparatus (234) for identifying a forecast power (P_{W,P}), which describes a power that can be fed in in a predetermined, future forecast period by the wind power installation (112),
- a forecast determination means (236) for determining a reduction forecast power (P_{nR}), which denotes, for the forecast period, a power by which the power fed in in the forecast period can be reduced, and
- a supply means (238) for supplying the reduction forecast power (P_{nR}) as negative control power,
- at least one controllable consumer (244), which can consume power on demand, wherein
- the identification apparatus (234) is configured
- such that the reduction forecast power (P_{nR}) is determined depending on the forecast power (P_{W,P}) and
- depending on a controllable consumption power, wherein the controllable consumption power describes a power that can be consumed on demand in the forecast period by the at least one controllable consumer (244) present in the wind power installation (100)
**characterized in that**
the infed power (P_{M}) is reduced by a value up to the level of the reduction forecast power (P_{nR}) in response to a demand for grid support in the forecast period and
the reduction forecast power (P_{nR}) is determined so that it is additively at least made up of
- the production power (P_{W,P}) or a value thereof, in particular a minimum value thereof, multiplied by a prescribable quality value, and
- the controllable consumption power, wherein in each case a forecast availability of the respective controllable.

16. The wind power installation (100), in particular as claimed in claim 15, prepared to be used in a wind farm (112) as claimed in one of claims 10 to 14 and/or to execute a method as claimed in one of claims 1 to 9 or to take part in same.

## Revendications

1. Procédé de fonctionnement d'un parc éolien (112), comprenant plusieurs éoliennes (100), ou d'une éolienne (100), pour injecter de l'énergie électrique dans un réseau électrique (120), comportant les étapes suivantes :
- l'injection d'énergie électrique dans le réseau électrique (120),
- la spécification d'une énergie électrique prévisionnelle (P_{W,P}), qui décrit l'énergie électrique injectable, lors d'une période prévisionnelle future prédéterminée, par le biais du parc éolien (112) ou de l'éolienne (100),
- la détermination d'une énergie électrique prévisionnelle de réduction (P_{nR}) , qui désigne une énergie électrique pour la période prévisionnelle afin que l'énergie électrique (P_{M}) injectée lors de la période prévisionnelle puisse être réduite, et
- l'offre de l'énergie électrique prévisionnelle de réduction (P_{nR}) en tant qu'énergie électrique de régulation négative,
dans lequel
- l'énergie électrique prévisionnelle de réduction (P_{nR}) est déterminée
- en fonction de l'énergie électrique prévisionnelle (P_{M}) et
- en fonction d'une énergie électrique de consommation commandable, dans lequel l'énergie électrique de consommation commandable décrit une énergie électrique qui peut être consommée à la demande lors de la période prévisionnelle par le biais de consommateurs commandables (244) présents dans le parc éolien (112) ou dans l'éolienne (244),
**caractérisé en ce que**
l'énergie électrique (P_{M}) injectée est réduite, sur une demande d'assistance du réseau lors de la période prévisionnelle, d'une valeur jusqu'à hauteur de l'énergie électrique prévisionnelle de réduction (P_{nR}) et
l'énergie électrique prévisionnelle de réduction (P_{nR}) est déterminée de sorte qu'elle se compose au moins de manière additive
- de l'énergie électrique de production (P_{W,P}) ou d'une valeur de celle-ci, en particulier d'une valeur minimale de celle-ci, multipliée par un facteur de qualité prédéfinissable, et
- de l'énergie électrique de consommation commandable, dans lequel une disponibilité prévisionnelle du consommateur commandable (244) respectif est à chaque fois prise en compte pour la détermination de l'énergie électrique de consommation commandable.

2. Procédé selon la revendication 1,
**caractérisé en ce que**
un ou plusieurs des consommateurs commandables (244) sont mis en circuit et/ou commandés dans leur diminution de puissance de sorte que l'énergie électrique (P_{M}) injectée est de ce fait réduite, dans lequel de plus de l'énergie électrique est prélevée du réseau électrique (120) et consommée lorsque l'énergie électrique (P_{M}) injectée pas encore réduite est inférieure à l'énergie électrique prévisionnelle de réduction (P_{nR}) et est inférieure à une énergie électrique de réduction demandée.

3. Procédé selon la revendication 1 ou 2,
**caractérisé en ce que**
l'énergie électrique de consommation commandable
- se compose de plusieurs énergies électriques partielles, dans lequel
- chaque énergie électrique partielle est associée à un consommateur commandable (244) et
- une, plusieurs ou toutes les énergies électriques partielles sont calculées chacune d'après une énergie électrique maximale de leur consommateur commandable (244), multipliée par une disponibilité prévisionnelle de leur consommateur commandable (244).

4. Procédé selon l'une quelconque des revendications précédentes,
**caractérisé en ce que**
les consommateurs commandables (244) sont commandés par une unité centrale de commande de parc (232) du parc éolien (112) et/ou l'unité centrale de commande de parc (232) reçoit d'un poste de gestion de réseau (242), qui est prévu pour la commande du réseau électrique (120), un signal de demande en tant qu'une ou la demande d'assistance du réseau et, en fonction de cette demande, réduit l'énergie électrique (P_{M}) injectée et, le cas échéant, commande de manière appropriée les consommateurs commandables (244).

5. Procédé selon l'une quelconque des revendications précédentes,
**caractérisé en ce que**
- au moins un accumulateur d'énergie est présent dans le parc éolien (112) ou dans l'éolienne (100) afin de mettre à disposition de l'énergie électrique supplémentaire au moins temporairement à l'énergie éolienne, qui est générée par les éoliennes (100) du parc éolien (112) ou par l'éolienne (100), aux fins d'injection dans le réseau électrique (120), dans lequel
- l'énergie électrique prévisionnelle de réduction (P_{nR}) est déterminée en plus en fonction de l'énergie électrique disponible de l'au moins un accumulateur d'énergie.

6. Procédé selon l'une quelconque des revendications précédentes,
**caractérisé en ce que**
l'énergie électrique prévisionnelle de réduction (P_{nR}) est employée en tant qu'énergie de régulation temporaire négative.

7. Procédé selon l'une quelconque des revendications précédentes,
**caractérisé en ce que**,
pour la commande ou la coordination de la commande d'un, de plusieurs ou de tous les consommateurs commandables (244), il est prévu une unité centrale de commande de consommateurs (246), dans lequel l'unité centrale de commande de consommateurs (246) est couplée de préférence à une ou à l'unité centrale de commande de parc (232) et reçoit de l'unité centrale de commande de parc (232) une valeur de consigne de consommation totale qui indique la valeur dont la consommation des consommateurs commandables (244) doit être réduite au total.

8. Procédé selon l'une quelconque des revendications précédentes,
**caractérisé en ce que**
l'énergie électrique prévisionnelle (P_{W,P}) et/ou l'énergie électrique prévisionnelle de réduction (P_{nR}) sont indiquées en tant que variation dans le temps au cours de la période prévisionnelle.

9. Procédé selon l'une quelconque des revendications précédentes,
**caractérisé en ce que**
- la période prévisionnelle dure de 12 à 48 heures, de préférence de 18 à 36 heures, en particulier environ 24 heures et/ou
- la période prévisionnelle est divisée en tranches horaires de 4 heures et/ou
- la période prévisionnelle est divisée en intervalles de 15 minutes.

10. Parc éolien (112) avec plusieurs éoliennes (100) pour injecter de l'énergie électrique dans un réseau électrique (120), comportant :
- un dispositif d'injection (230) pour injecter de l'énergie électrique dans le réseau électrique (120),
- un dispositif de spécification (234) pour spécifier une énergie électrique prévisionnelle (P_{W,P}), qui décrit une énergie électrique injectable par le biais du parc éolien (112) lors d'une période prévisionnelle future prédéfinie,
- un moyen de détermination prévisionnelle (236) pour déterminer une énergie électrique prévisionnelle de réduction (P_{nR}) , qui décrit, pour la période prévisionnelle, une énergie électrique de laquelle l'énergie électrique injectée lors de la période prévisionnelle peut être réduite, et
- un moyen d'offre (238) pour offrir de l'énergie électrique prévisionnelle de réduction (P_{nR}) en tant qu'énergie électrique de régulation négative,
- au moins un consommateur commandable (244), qui peut consommer à la demande de l'énergie électrique, dans lequel
- le dispositif de spécification (234) est conçu
- de sorte que l'énergie électrique prévisionnelle de réduction (P_{nR}) est déterminée en fonction de l'énergie électrique prévisionnelle (P_{W,P}) et
- en fonction d'une énergie électrique de consommation commandable, dans lequel l'énergie électrique de consommation commandable décrit une énergie électrique qui peut être consommée à la demande lors de la période prévisionnelle par le biais de l'au moins un consommateur commandable (244) présent dans le parc éolien (112),
**caractérisé en ce que**
l'énergie électrique (P_{M}) injectée est réduite, sur une demande d'assistance du réseau lors de la période prévisionnelle, d'une valeur jusqu'à hauteur de l'énergie électrique prévisionnelle de réduction (P_{nR}) et
l'énergie électrique prévisionnelle de réduction (P_{nR}) est déterminée de sorte qu'elle se compose de manière additive au moins
- de l'énergie électrique de production (P_{W,P}) ou d'une valeur de celle-ci, en particulier d'une valeur minimale de celle-ci, multipliée par un facteur de qualité prédéfinissable, et
- de l'énergie électrique de consommation commandable, dans lequel une disponibilité prévisionnelle du consommateur commandable (244) respectif est à chaque fois prise en compte pour la détermination de l'énergie électrique de consommation commandable.

11. Parc éolien (112) selon la revendication 10,
**caractérisé en ce que**
il est préparé pour exécuter un procédé selon l'une quelconque des revendications 1 à 9, en particulier **en ce qu'**il comporte une unité centrale de commande de parc (232) et que l'unité centrale de commande de parc (232) exécute intégralement ou partiellement le procédé.

12. Parc éolien selon la revendication 10 ou 11,
**caractérisé en ce que**,
pour la commande ou la coordination de la commande d'un, de plusieurs ou de tous les consommateurs commandables (244), il est prévu une unité centrale de commande de consommateurs (246), dans lequel l'unité centrale de commande de consommateurs (246) est couplée de préférence à une ou à l'unité centrale de commande de parc (232) et est préparée pour recevoir, de l'unité centrale de commande de parc (232), une valeur de consigne de consommation totale qui indique la valeur dont la consommation des consommateurs commandables doit être réduite au total.

13. Parc éolien selon l'une quelconque des revendications 10 à 12,
**caractérisé en ce que**
- au moins un des consommateurs est formé en tant que consommateur branchable de manière externe pour être mis en circuit par un appareil de commande dans le parc éolien pour la consommation d'énergie électrique, et/ou
- au moins un des consommateurs est formé en tant que consommateur commandable de manière externe dans son absorption d'énergie électrique pour être commandé par l'appareil de commande dans le parc éolien pour la consommation d'énergie électrique avec une énergie électrique réglable en grandeur, et dans lequel
l'appareil de commande est formé de préférence en tant qu'une ou l'unité centrale de commande de parc et/ou en tant qu'une ou l'unité centrale de commande de consommateurs.

14. Parc éolien (112) selon l'une quelconque des revendications 10 à 13,
**caractérisé en ce que**
- au moins un accumulateur d'énergie est présent dans le parc éolien (112) afin de mettre à disposition de l'énergie électrique supplémentaire au moins temporairement pour l'énergie éolienne, qui est générée par les éoliennes (100) du parc éolien (112), pour l'injecter dans le réseau électrique (120), dans lequel l'au moins un accumulateur d'énergie est préparé,
- pour réduire l'énergie électrique à la demande d'un opérateur de réseau et
- pour mettre à disposition une information sur un état de charge et/ou une prévision sur de l'énergie électrique réductible dans la période prévisionnelle, en particulier pour la transmettre à l'unité centrale de commande de parc (232).

15. Éolienne (100) pour injecter de l'énergie électrique dans un réseau électrique (120), comportant :
- un dispositif d'injection (230) pour injecter de l'énergie électrique dans le réseau électrique (120),
- un dispositif de spécification (234) pour spécifier une énergie électrique prévisionnelle (P_{W,P}), qui décrit une énergie électrique injectable par le biais de l'éolienne (112) lors d'une période prévisionnelle future prédéfinie,
- un moyen de détermination prévisionnelle (236) pour déterminer une énergie électrique prévisionnelle de réduction (P_{nR}) , qui décrit, pour la période prévisionnelle, une énergie électrique de laquelle l'énergie électrique injectée lors de la période prévisionnelle peut être réduite, et
- un moyen d'offre (238) pour offrir de l'énergie électrique prévisionnelle de réduction (P_{nR}) en tant qu'énergie électrique de régulation négative,
- au moins un consommateur commandable (244), qui peut consommer à la demande de l'énergie électrique, dans laquelle
- le dispositif de spécification (234) est conçu
- de sorte que l'énergie électrique prévisionnelle de réduction (P_{nR}) est déterminée en fonction de l'énergie électrique prévisionnelle (P_{W,P}) et
- en fonction d'une énergie électrique de consommation commandable, dans lequel l'énergie électrique de consommation commandable décrit une énergie électrique qui peut être consommée à la demande lors de la période prévisionnelle par le biais de l'au moins un consommateur commandable (244) présent dans l'éolienne (100),
**caractérisée en ce que**
l'énergie électrique (P_{M}) injectée est réduite, sur une demande d'assistance du réseau lors de la période prévisionnelle, d'une valeur jusqu'à hauteur de l'énergie électrique prévisionnelle de réduction (P_{nR}) et
l'énergie électrique prévisionnelle de réduction (P_{nR}) est déterminée de sorte qu'elle se compose de manière additive au moins
- de l'énergie électrique de production (P_{W,P}) ou d'une valeur de celle-ci, en particulier d'une valeur minimale, multipliée par un facteur de qualité prédéfinissable, et
- de l'énergie électrique de consommation commandable, dans lequel une disponibilité prévisionnelle du consommateur commandable (244) respectif est à chaque fois prise en compte pour la détermination de l'énergie électrique de consommation commandable.

16. Éolienne (100), en particulier selon la revendication 15, préparée pour être employée dans un parc éolien (112) selon l'une quelconque des revendications 10 à 14 et/ou pour exécuter un procédé selon l'une quelconque des revendications 1 à 9 ou pour y participer.
